(19) Europäisches Patentamt
European Patent Office
Office européen des brevets

(11) **EP 2 661 637 B1**

(12) **FASCICULE DE BREVET EUROPEEN**

(45) Date de publication et mention de la délivrance du brevet:
**27.04.2022 Bulletin 2022/17**

(21) Numéro de dépôt: **11802397.7**

(22) Date de dépôt: **20.12.2011**

(51) Classification Internationale des Brevets (IPC):
**G01R 29/08** *(2006.01)* **H04B 17/00** *(2015.01)*

(52) Classification Coopérative des Brevets (CPC):
**H04L 27/0006; H04L 27/2666; H04L 27/2678**

(86) Numéro de dépôt international:
**PCT/EP2011/073420**

(87) Numéro de publication internationale:
**WO 2012/084956 (28.06.2012 Gazette 2012/26)**

(54) **PROCEDE PROTOCOLE ORIENTE DE TRAITEMENT DES SIGNAUX STATIONNAIRES, PARTIELLEMENT STATIONNAIRES, OU CYCLO-STATIONNAIRES**

ORIENTIERTES PROTOKOLLVERFAHREN ZUR VERARBEITUNG VON STATIONÄREN SIGNALEN, TEILWEISE STATIONÄREN SIGNALEN ODER ZYKLOSTATIONÄREN SIGNALEN

ORIENTED PROTOCOL METHOD FOR THE PROCESSING OF STATIONARY SIGNALS, PARTIALLY STATIONARY SIGNALS OR CYCLOSTATIONARY SIGNALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2010 FR 1005017**

(43) Date de publication de la demande:
**13.11.2013 Bulletin 2013/46**

(73) Titulaire: **THALES**
**92400 Courbevoie (FR)**

(72) Inventeurs:
• **DELAVEAU, François**
**92704 Colombes Cedex (FR)**
• **GERMOND, Cécile**
**92704 Colombes Cedex (FR)**
• **ROBIN, Dominique**
**92704 Colombes Cedex (FR)**

(74) Mandataire: **Marks & Clerk France**
**Immeuble "Visium"**
**22, avenue Aristide Briand**
**94117 Arcueil Cedex (FR)**

(56) Documents cités:
**WO-A2-2008/042865 US-A1- 2004 022 301**
**US-A1- 2008 266 166**

• HOU YING-NI ET AL: "Airship radar imaging for stationary and moving targets based on thinned array and code division signal", SYNTHETIC APERTURE RADAR, 2009. APSAR 2009. 2ND ASIAN-PACIFIC CONFERENCE ON, IEEE, PISCATAWAY, NJ, USA, 26 October 2009 (2009-10-26), pages 622-625, XP031596304, ISBN: 978-1-4244-2731-4
• YONG XIANG ET AL: "Blind separation of cyclostationary sources based on phase-fyequency redundancy", SIGNAL PROCESSING, 2004. PROCEEDINGS. ICSP '04. 2004 7TH INTERNATIONAL CONFERENCE ON BEIJING, CHINA AUG. 31 - SEPT 4, 2004, PISCATAWAY, NJ, USA,IEEE, PISCATAWAY, NJ, USA, vol. 1, 31 August 2004 (2004-08-31), pages 403-406, XP010809646, DOI: 10.1109/ICOSP.2004.1452667 ISBN: 978-0-7803-8406-4
• MUN GEON KYEONG ET AL: "Outdoor communications using adaptive arrays in CDMA mobile systems", VEHICULAR TECHNOLOGY CONFERENCE, 1999 IEEE 49TH HOUSTON, TX, USA 16-20 MAY 1999, PISCATAWAY, NJ, USA,IEEE, US, vol. 1, 16 May 1999 (1999-05-16), pages 264-268, XP010341992, ISBN: 978-0-7803-5565-1

- KOURTIS S: "Investigation of the mobile terminal optimum operating point in UMTS-FDD initial cell search procedure", PERSONAL, INDOOR AND MOBILE RADIO COMMUNICATIONS, 2000. PIMRC 2000. TH E 11TH IEEE INTERNATIONAL SYMPOSIUM ON SEPT. 18-21, 2000, PISCATAWAY, NJ, USA,IEEE, vol. 1, 18 September 2000 (2000-09-18), pages 348-352, XP010520659, ISBN: 978-0-7803-6463-9
- CHI-FANG LI ET AL: "ASIC design for cell search in 3GPP W-CDMA", IEEE 54TH VEHICULAR TECHNOLOGY CONFERENCE. VTC FALL 2001. PROCEEDINGS 7-11 OCT. 2001 ATLANTIC CITY, NJ, USA; [IEEE VEHICULAR TECHNOLGY CONFERENCE], IEEE, IEEE 54TH VEHICULAR TECHNOLOGY CONFERENCE. VTC FALL 2001. PROCEEDINGS (CAT. NO.01CH37211) IEEE P, vol. 3, 7 October 2001 (2001-10-07), pages 1383-1387, XP010562188, DOI: 10.1109/VTC.2001.956423 ISBN: 978-0-7803-7005-0

## Description

L'objet de la présente invention concerne un procédé permettant d'associer des signaux présentant une structure totalement ou partiellement connue, ou dont les contenus sont stationnaires, partiellement stationnaires (certains contenus seulement sont stationnaires), ou quasi-stationnaires (c'est à dire évoluant très lentement durant la mise en œuvre de l'invention, ou variant de façon prédictible avec une faible combinatoire), ainsi le cas échéant des mesures ou des résultats d'estimateurs appliqués à ces signaux. L'invention s'applique notamment à tous les signaux dont les paramètres temps-fréquence, ou les structures de trame, ou les contenus partiels ou totaux de messages, sont soit répétitifs avec des motifs de répétition connus, soit connus a priori avec des schémas de codage et de modulation connus, soit analysés au préalable, ces signaux étant reçus sur un capteur ou sur un système de capteurs.

Le procédé selon l'invention permet l'association de mesures, de résultats d'estimation, de démodulation et de décodage sur ces signaux

Dans la description, les définitions suivantes seront utilisées relativement à un capteur ou à un système de plusieurs capteurs.

Le mot structure désigne l'organisation dans le domaine temps fréquence du signal transmis par un émetteur sur un Squitter, sur un Slot, sur un Intervalle Temporel, sur une trame, sur une super-trame, sur une hyper-trame etc..

Le mot contenu désigne les données codées, éventuellement répétées, modulées et transmises dans un signal. En particulier les redondances et les répétitions des contenus, lorsqu'elles sont déterministes, stationnaires ou quasi stationnaires, sont exploitables dans le cadre de la présente invention, même lorsque les données transmises redondées et répétées ne sont pas a priori connues des capteurs.

La détection d'un signal correspond à la capacité à décider de la présence du signal dans la bande et la durée d'analyse du capteur, ou de l'un au moins des capteurs du système de capteurs

Le mot association désigne la capacité à mettre en relation univoque un émetteur et les signaux produits par cet émetteur dans la bande et la durée d'analyse du capteur ou des capteurs du système de capteurs ; cette relation univoque s'applique de même à tout type de résultats d'estimation obtenus sur ces signaux (paramètres de modulation, signature spatiale ou vecteurs direction d'arrivée sur un réseau antennaire, caractéristiques stationnaires et cyclostationnaires, etc.) ; cette relation univoque s'applique de même à tout type de marquants sur les signaux (par exemple, les paramètres d'enveloppe temps fréquence de ces signaux, le tramage, la synchronisation par rapport au tramage (« squitter », slot, Intervalle de Temps, trame, multi-trame, etc.), les plans de fréquence, les séquences de signaux permettant la synchronisation en temps et en fréquence par des procédés variés, les contenus de ces séquences de signaux pouvant être obtenus par consultation des normes, par reconstitution au moyen d'analyses préalables, par démodulation et décodage au moyen de procédés variés, etc.

La discrimination d'un émetteur désigne la capacité à discerner les signaux produits par l'émetteur et à réaliser l'association entre ces signaux et l'émetteur, dans la bande et dans la durée d'analyse du capteur.

Le dénombrement est la capacité à compter tout ou partie des émetteurs présents dans la bande et dans la durée d'analyse du capteur.

La localisation d'un émetteur est la capacité à déterminer le lieu de l'émetteur.

L'extraction est la capacité à sélectionner tout ou partie des estimations de paramètres et des marquants produits sur les signaux afin de renforcer les procédures de détection, de réjection de fausse alarme, de localisation et de pistage.

Le pistage est la capacité à suivre dans le temps la détection et la localisation d'un émetteur.

L'expression « séquence de référence » désigne une suite de symboles modulés dans le signal reçu, connue a priori ou avec une faible combinatoire, qui est exploitée dans le cadre de l'invention. Des exemples sont les préambules de synchronisation présents dans les signaux ADS-B, les séquences d'apprentissages présentes dans les Times Slots GSM, les codes de scramblings des signaux PN (GPS) et CDMA (3GPP et 3GPP2), les symboles ou porteuses pilotes présents dans les modulations OFDM rencontrées en radio et télé-diffusion numérique (DRM, DVB-T, DAB/DMR) etc.

L'expression « signal de référence » désigne une composante particulière du signal reçu, connue a priori ou avec une faible combinatoire, qui est exploitée dans le cadre de l'invention. Le signal de référence peut par exemple provenir de la modulation d'une séquence de référence, se trouver présent sous formes de tons ou de fronts de synchronisation, etc.

La présente invention s'applique, dans le domaine de la détection, du dénombrement, d'association entre mesures, de localisation, d'extraction et du suivi de mouvement d'un dispositif émettant de manière continue ou discontinue des ondes électromagnétiques ou acoustiques. Elle peut notamment s'appliquer dans le domaine de la démodulation et du décodage d'émetteurs de communications, particulièrement en environnement radioélectrique dense et en présence d'interférences, en cas de réception à faibles rapports signaux à bruit, ou en cas de conditions de propagation complexes (trajets multiples, brouillage, et toute autres perturbations liées à la présence d'un grand nombre d'émetteurs, etc.).

WO 2008/042865 A2 (QUALCOMM INC [US]; KIM BYOUNG-HOON [US]; MALLADI DURGA PRASAD [US]) 10 avril 2008, révèle une recherche de cellule utlisant les séquences contenues dans le midamble.

Les capteurs et systèmes de capteurs radioélectriques présents sur des porteurs spatiaux ou aéro tels que les avions, sur les véhicules terrestres sur points hauts, sur les navires en approche portuaire qui traitent certaines bandes de fréquences fortement occupées, par exemple, les bandes de fréquence dédiées aux systèmes de communication réutilisant spatialement et temporellement la même ressource radioélectrique, font face à des environnements très denses et très complexes (émetteurs multiples employant les mêmes ressources spectrales, interférences et perturbations diverses, propagation par multi-trajets, etc.), pour lesquels les capacités de discrimination et d'association sont centrales. Les capacités de discrimination et d'association sont aussi centrales lorsque les capteurs et les systèmes de capteurs radioélectriques reçoivent des signaux dans des conditions difficiles, par exemple, dans le cas de réception à faible rapport signal/bruit.

Détection et synchronisation : l'un des problèmes techniques à résoudre pour ces capteurs et systèmes de capteurs est celui de la détection du signal et de la synchronisation. De plus, il peut y être ajouté le problème du dénombrement, le problème de la localisation, de l'extraction et du suivi d'activité dans le temps, ainsi que le problème de la démodulation et du décodage dans le cas d'émetteurs de communication. Dans les environnements complexes décrits précédemment, les performances des capteurs actuels sont très limitées par la faiblesse et/ou par la complexité prohibitive des procédés d'association existants, qui réduit les capacités d'intégration et de post intégration, et de ce fait, réduit les performances des techniques précitées.

Localisation passive, extraction et suivi : le domaine de la localisation passive, de l'extraction et du suivi des émetteurs de communication est très vaste qu'il s'agisse :

- de techniques basées sur des estimateurs à partir des signaux : techniques pures TDOA (Time Différence Of Arrivai) ou mixtes TDOA/FDOA (Time Différence Of Arrival/Frequency Différence Of Arrivai), techniques pures AOA (Angle Of Arrivai) ou conjointes AOA/TDOA (Angle Of Arrival/Time Différence Of Arrivai);
- de techniques basées sur une production du contenu des messages de communication pour y décoder les positions des émetteurs ;
- de techniques d'extraction et de suivi basées sur l'exploitation des marquants de signaux de communication (tels que décrits dans la suite) ;
- de techniques d'extraction et de pistage basées sur l'exploitation des marquants de signaux de communication ou sur l'exploitation de la chaîne des estimées de localisation produites dans des filtres de Kalman simples ou étendus associés à de la gestion d'hypothèses sur les cinématiques d'émetteurs et à des procédés d'association mono-émetteur ou multi-émetteurs au moyen de critères locaux ou globaux de proximité.

Toutefois, en environnement complexe à grand nombre d'émetteurs reçus, tels que les environnements radio-cellulaires (GSM, UMTS, CDMA 2000, etc.), les environnements PMR, les réseaux de radiodiffusion et de télédiffusion (DAB, DVB) et les réseaux de radiomessagerie (ADS-B, TIS-B, AIS, etc.), vus à grande échelle (porteur aéronef, voire même dans certains cas points hauts terrestres, approches aéroportuaires etc.), ou pour certains cas de réception difficiles (masquages, faibles rapports signaux à bruits), tous les traitements de l'état de l'art sont très fortement pénalisés par la multiplicité des émissions simultanément reçues et par la difficulté inhérente à l'association entre les mesures, les signaux et les émetteurs multiples, difficulté qui induit :

- soit des associations à vraisemblance ou plausibilité faible voire douteuse,
- soit une gestion de combinatoire exponentielle.

Ainsi, faute d'une association efficace en amont dans l'état de l'art actuel, pour ces environnements radioélectriques complexes,

- les capacités d'intégration des mesures au cours du temps sont limitées,
- la sensibilité de la détection et la précision de synchronisation sont limitées par des capacités d'intégration réduites
- la précision de localisation est pénalisée par des capacités d'intégration réduites, et soumise par ailleurs à de nombreuses ambiguïtés possibles,
- l'extraction et le pistage d'émetteurs ne sont réalisables qu'au moyen d'associations par gestion d'hypothèses multiples à la combinatoire exponentielle, ou par des techniques basées sur la localisation qui est par nature imprécise et soumise à des ambiguïtés importantes faute d'une intégration suffisante dans ce type d'environnement.

La publication de Hou Ying-Ni et al, intitulée « Airship radar imaging for stationary and moving targets based on thinned array and code division signal », Synthetic Aperture Radar, 2009. Pages 622-625, XP 031196304, divulgue un procédé d'imagerie radar aéroportés à signaux émis ou à impulsions codées.

La demande de brevet US 2004/022301 divulgue un procédé dans lequel les récepteurs de communication sont des récepteurs spécifiques à signaux codés travaillant directement avec un émetteur et dans lequel les caractéristiques du signal codé émis pour choisies pour aider le récepteur à le détecter.

La publication de Yong Xiang et al, intitulée « Blind separation of cyclostationary sources based on phase-frequency redundancy », signal processing, 2004, proceedings, vol.1, 31 août 2004, pages 403-406, XP 010809646 concerne un procédé de traitement de séparation aveugle de sources.

L'objet de la présente invention est notamment de pallier une ou plusieurs des difficultés précitées pour un certain nombre de signaux, notamment pour les signaux présentant certaines caractéristiques d'enveloppe temps/fréquence ou certains contenus stationnaires, partiellement stationnaires ou quasi-stationnaires dans le temps, et pour les réseaux de communication d'intérêt utilisant ce type de signaux, qui génèrent ces environnements complexes. L'invention fournit un procédé d'association en amont très efficace et de nature à améliorer drastiquement tous les traitements mentionnés ci-dessus (amélioration des performances intrinsèques, réduction de la complexité).

L'association permet, comme il a été mentionné ci-dessus de mettre en relation des signaux, des marquants sur ces signaux, des mesures et des résultats d'estimation sur ces signaux, avec un émetteur, et ceci de manière univoque.

L'idée de la présente invention repose notamment sur une exploitation des redondances des signaux de communications, dès lors qu'il existe une certaine stationnarité des structures et des contenus, c'est-à-dire une variabilité seulement à moyen ou long terme des caractéristiques temps fréquence des signaux et/ou des contenus accessibles (détectables, et/ou démodulables et/ou décodables).

L'objet de l'invention concerne un procédé pour exploiter le déterminisme présent dans certains signaux et associer lesdits signaux entre eux dans un système comprenant un ou plusieurs récepteurs et un processeur, lesdits signaux étant stationnaires ou partiellement stationnaires, tel que proposé dans la revendication 1.

D'autres caractéristiques et avantages du dispositif selon l'invention apparaîtront mieux à la lecture de la description qui suit d'un exemple de réalisation donné à titre illustratif et nullement limitatif annexé des figures qui représentent :

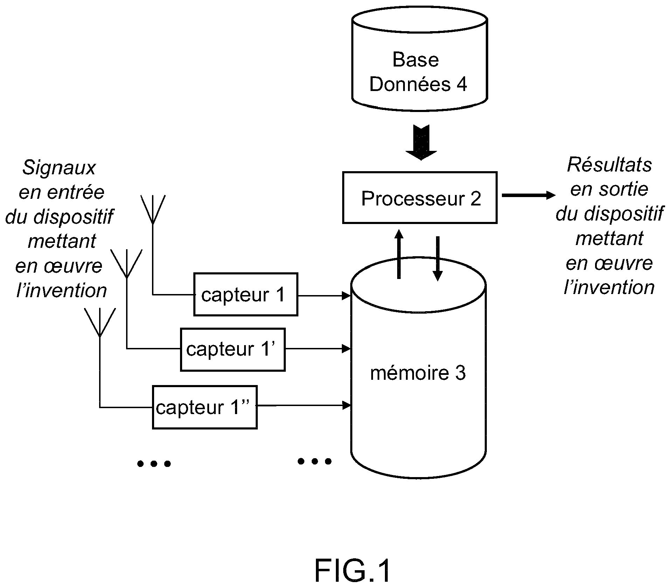

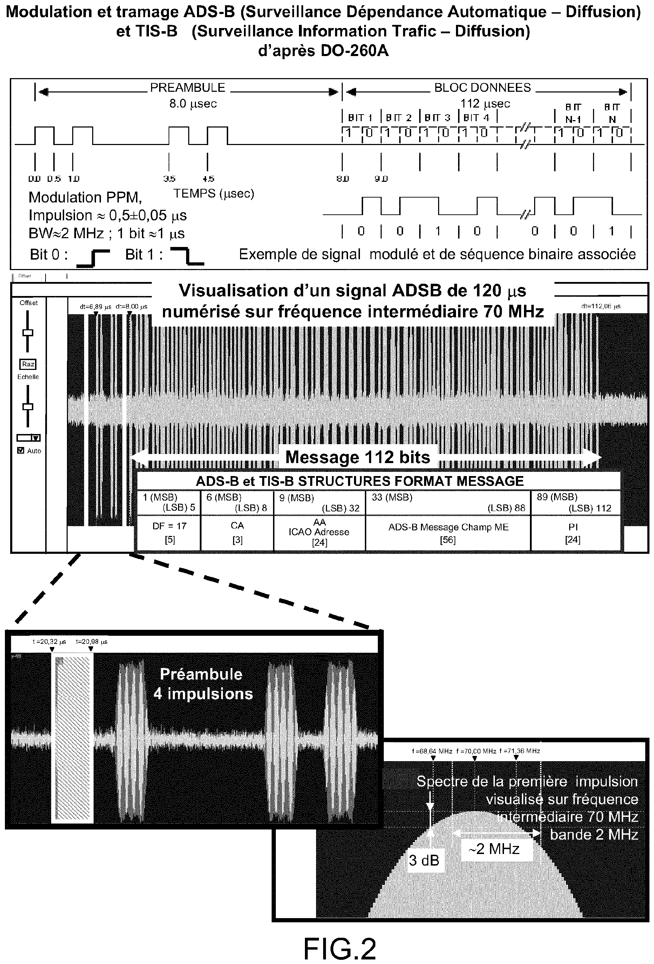

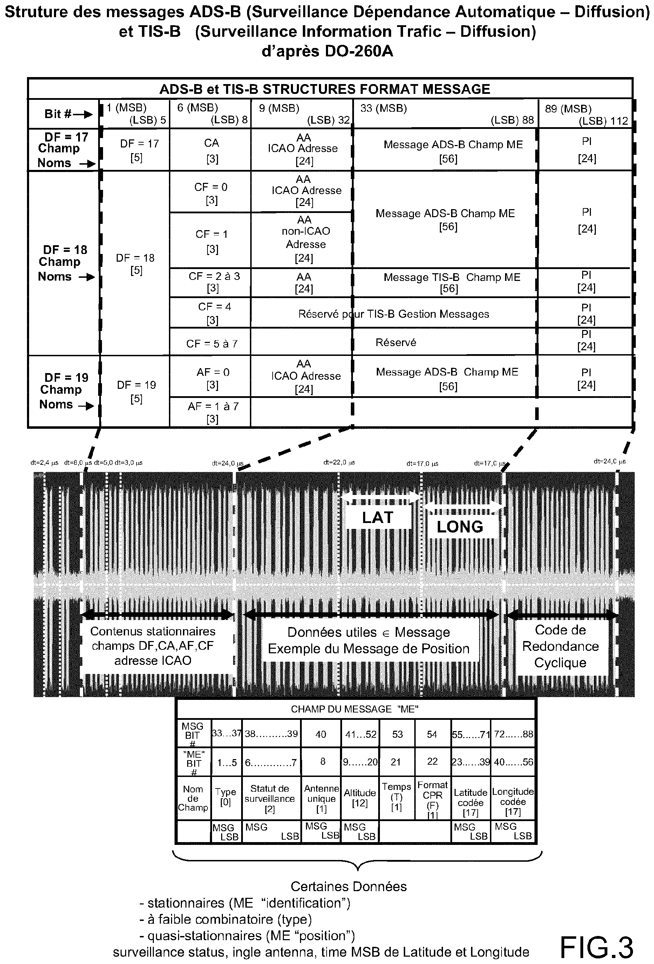

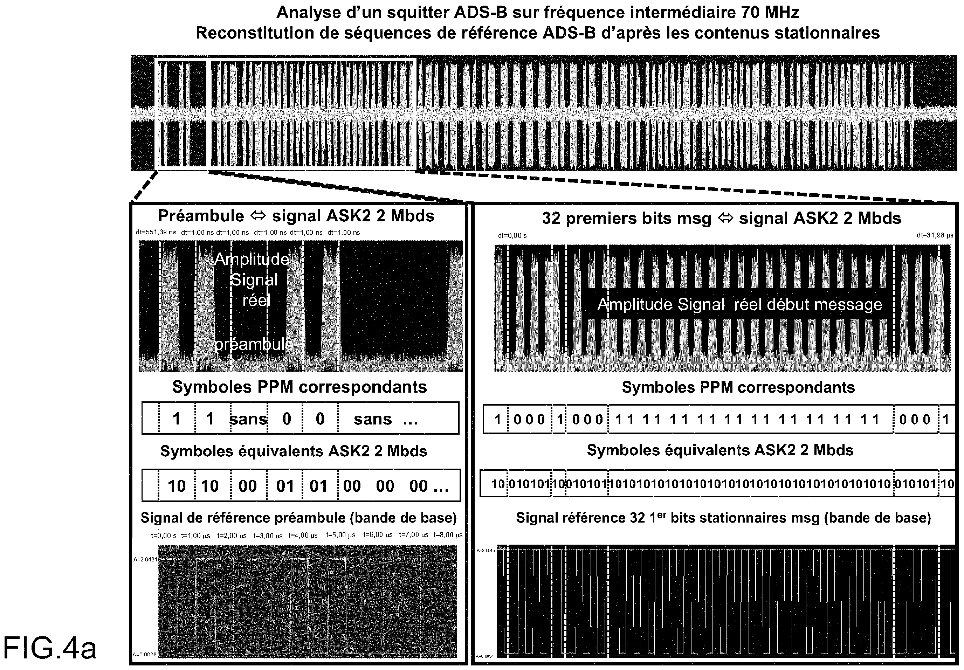

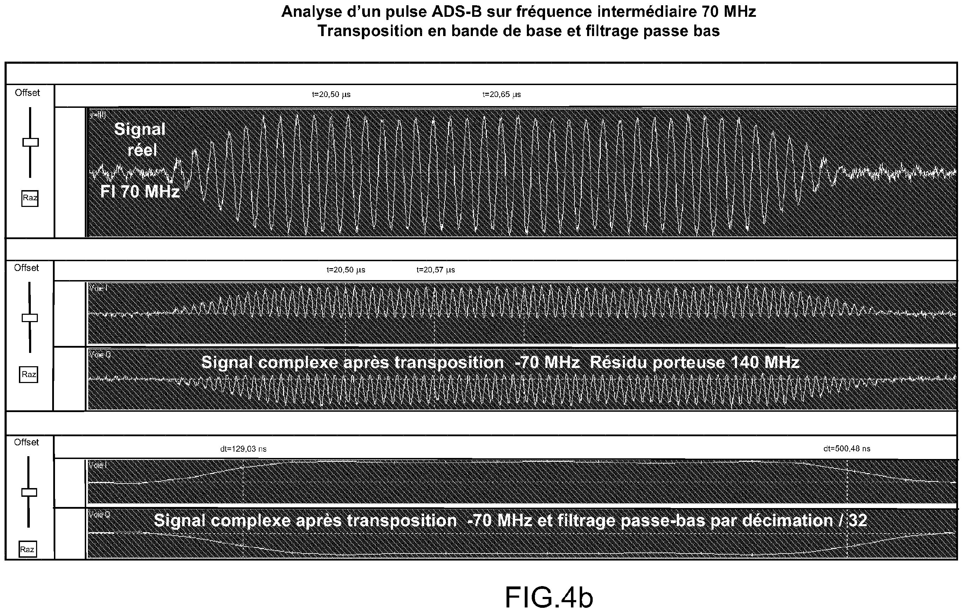

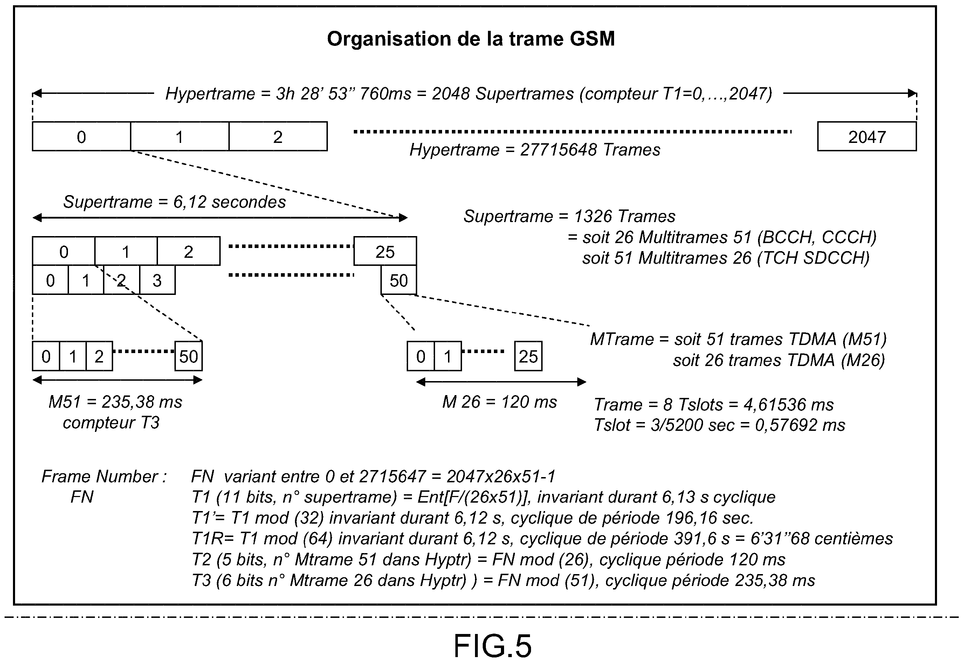

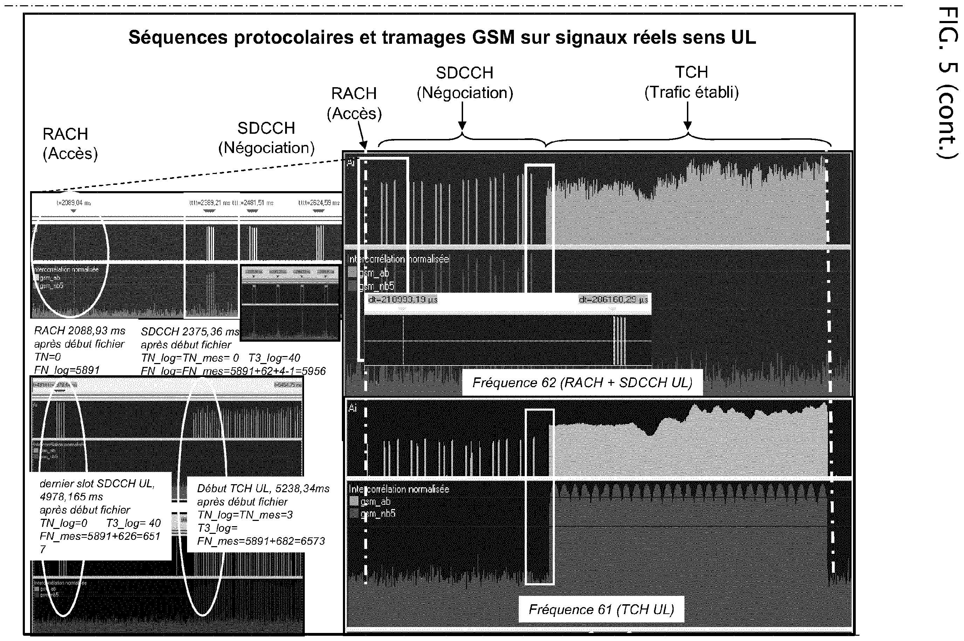

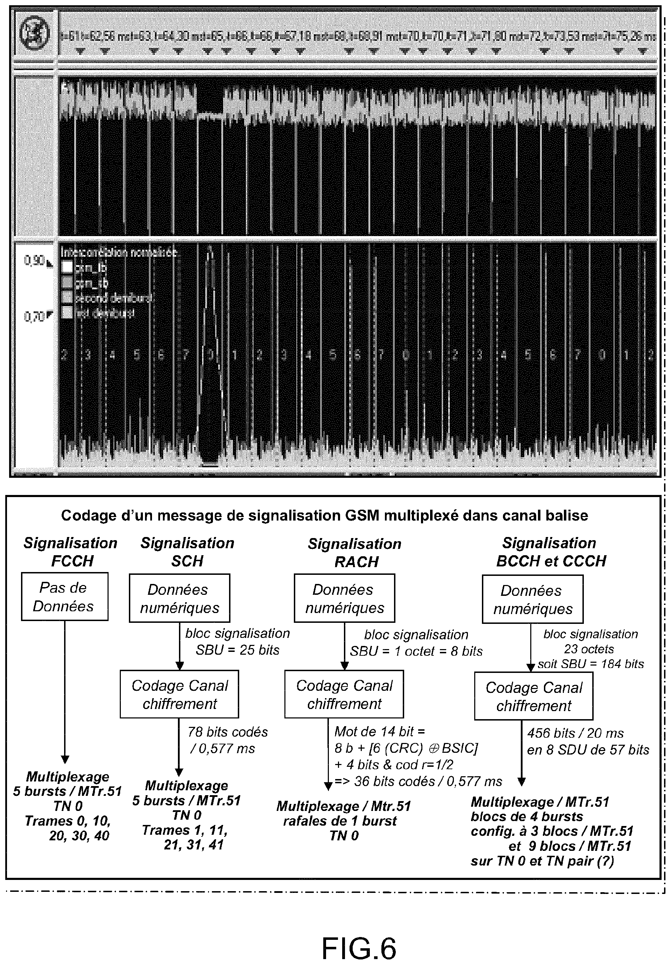

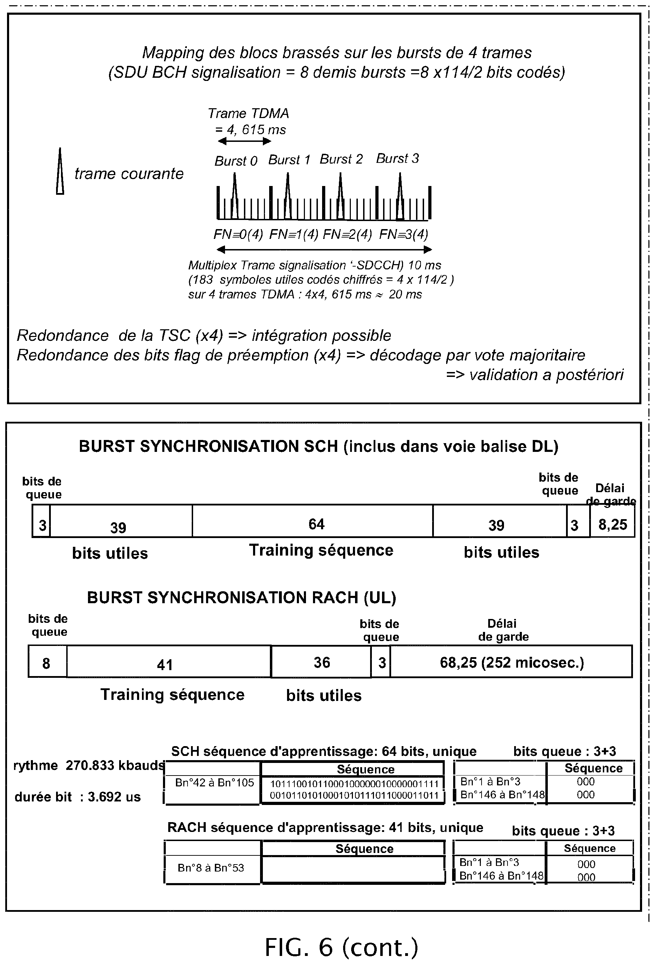

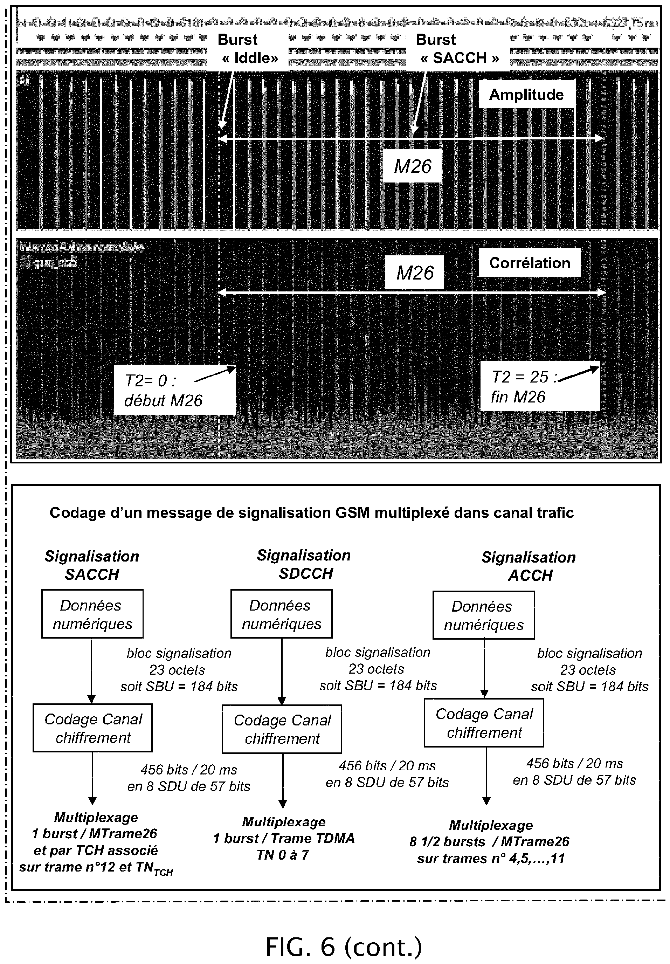

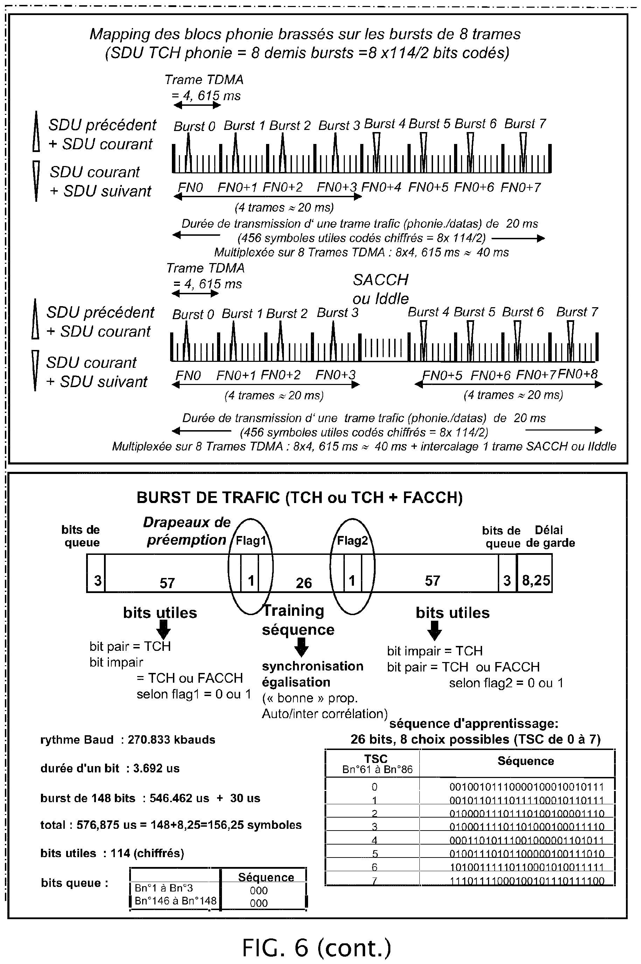

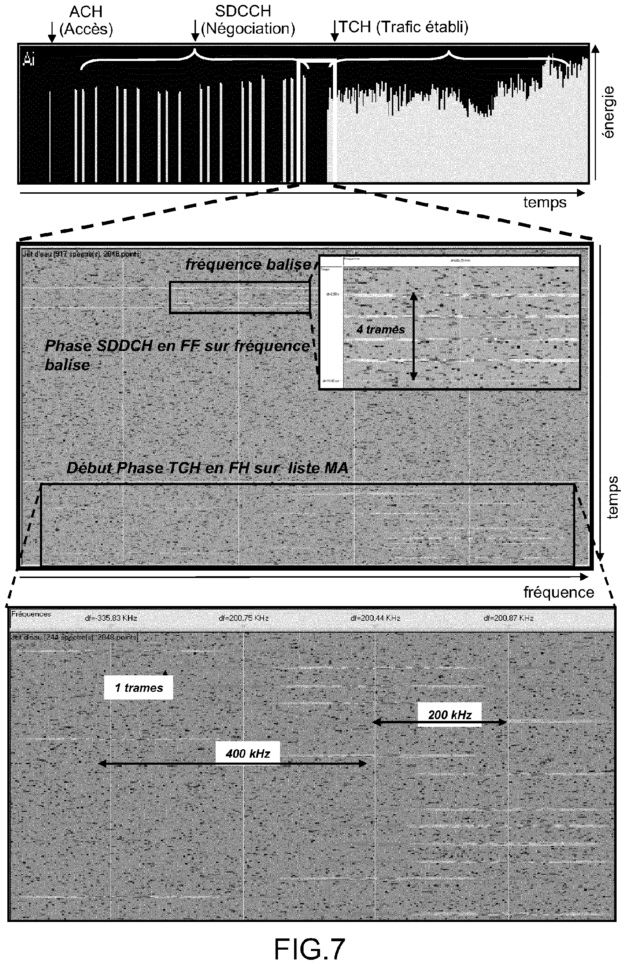

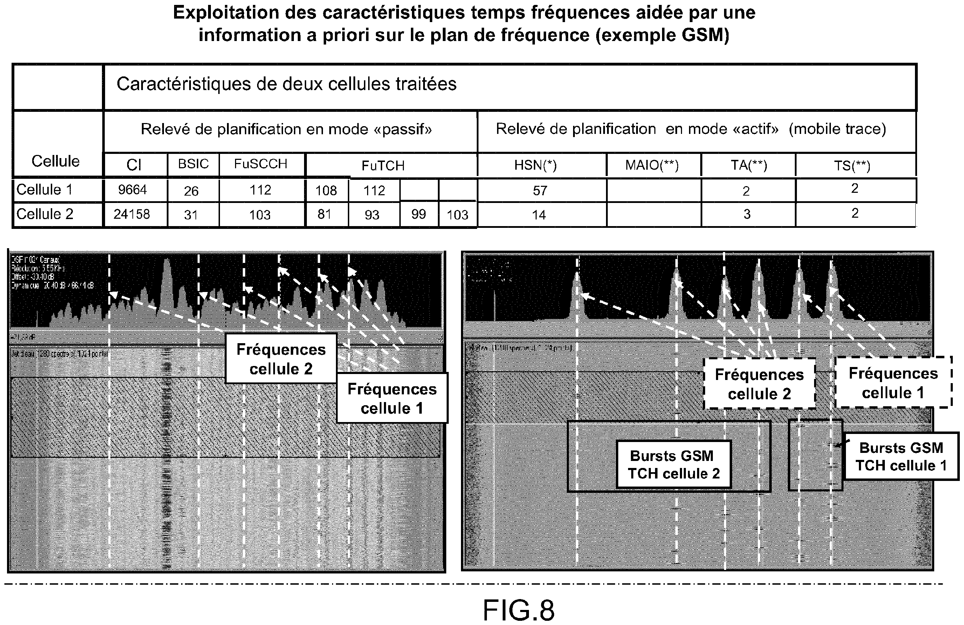

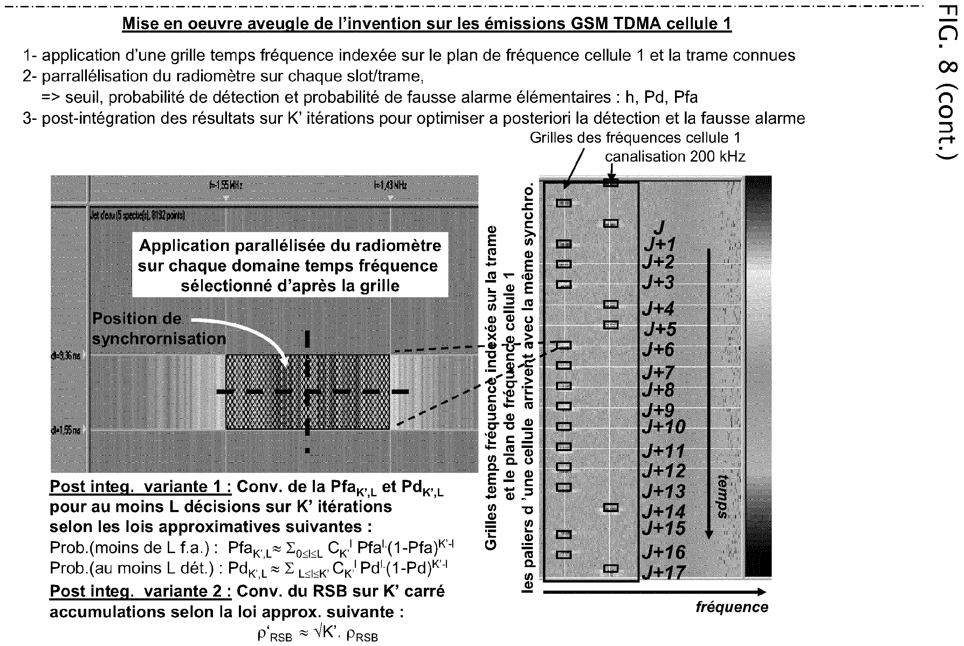

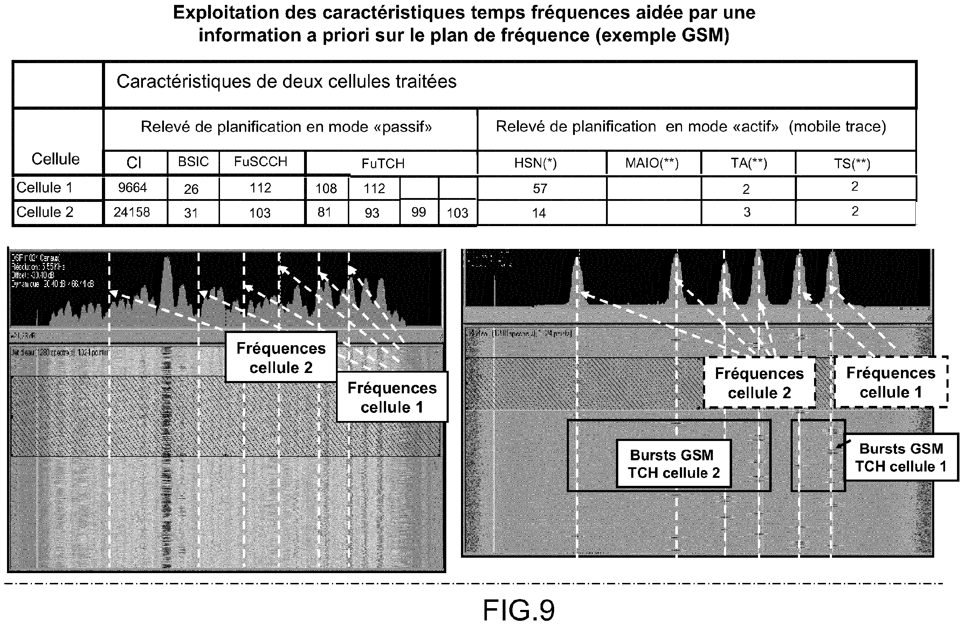

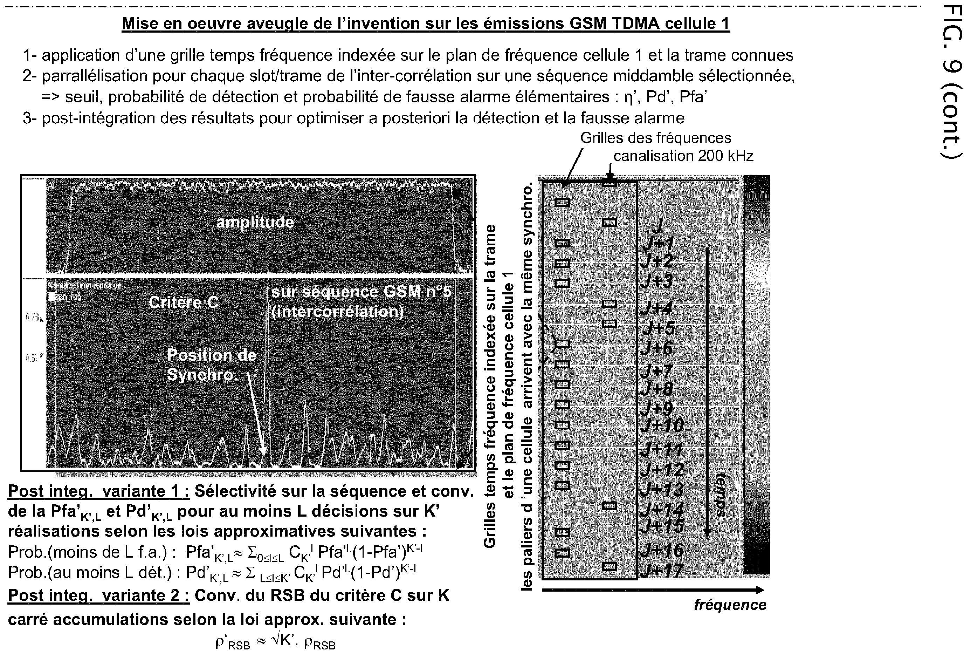

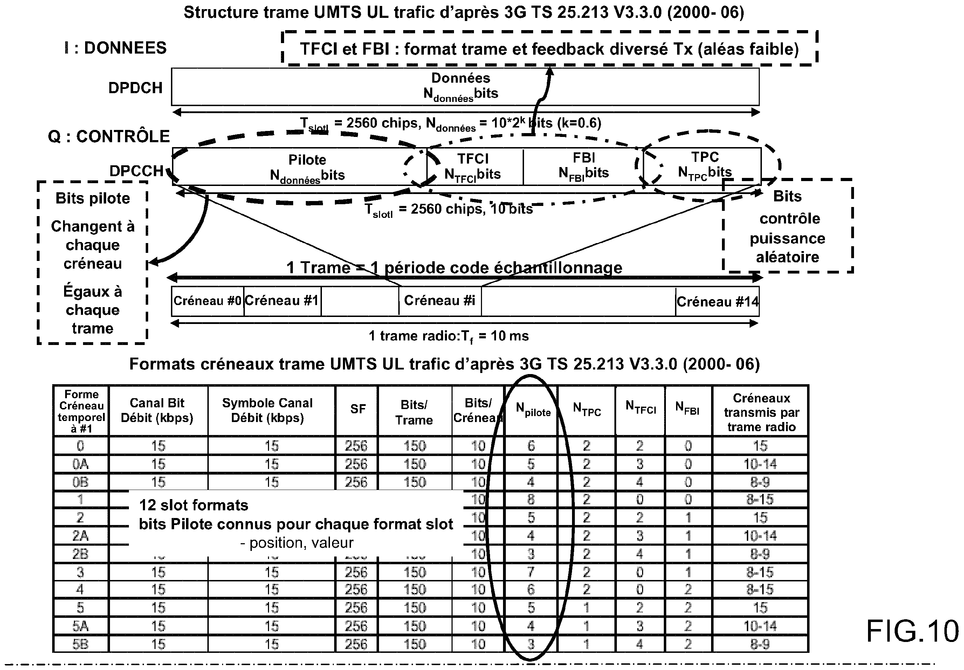

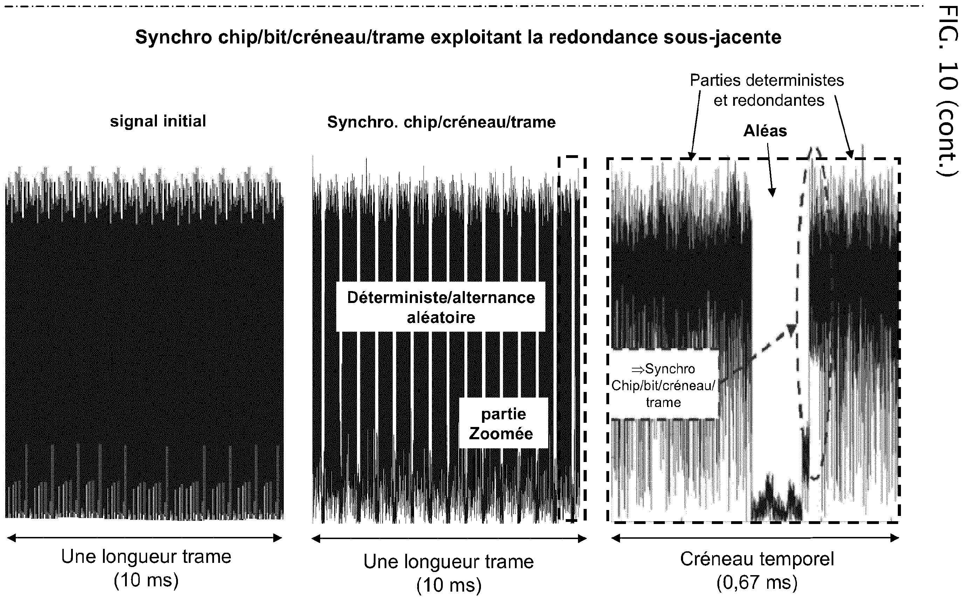

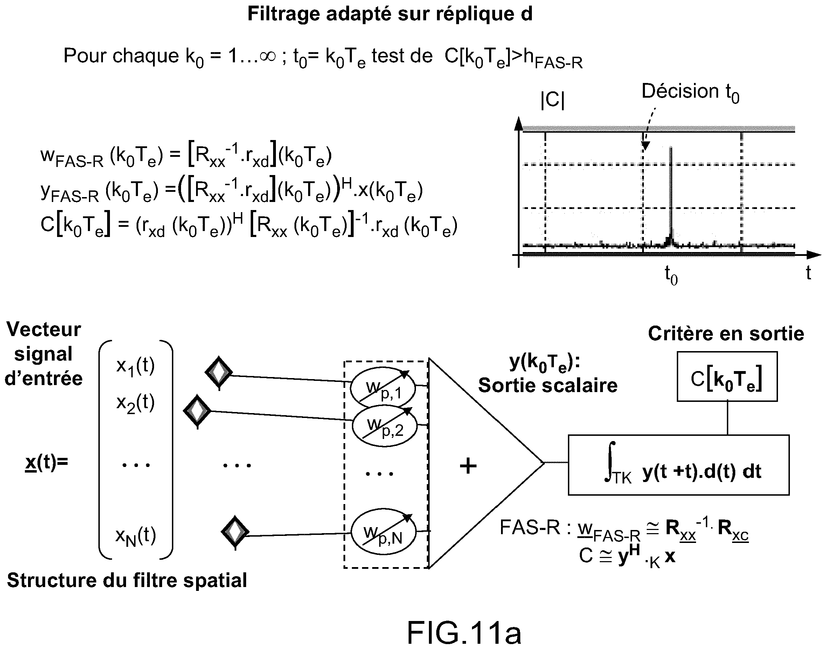

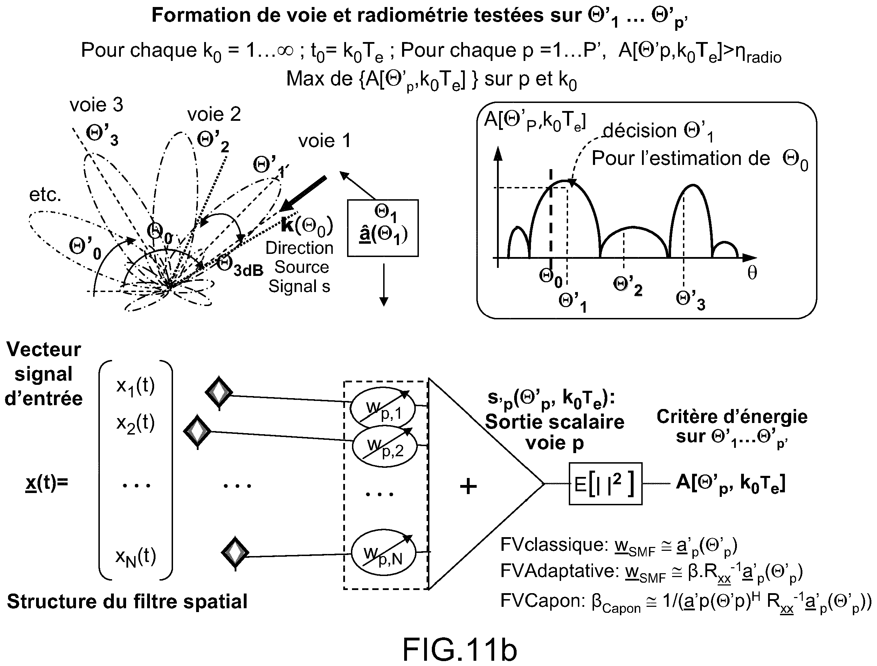

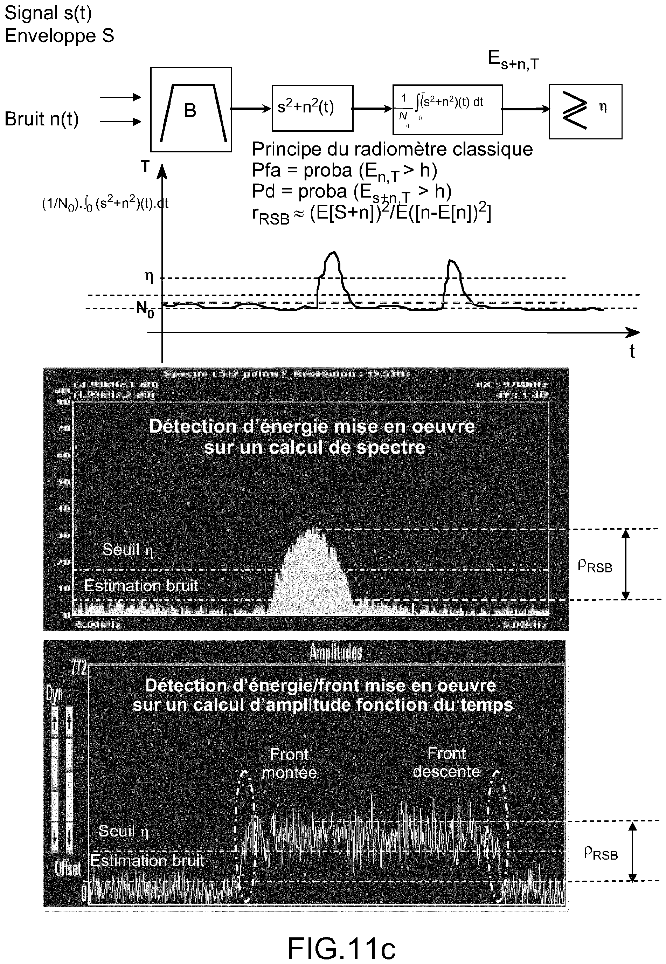

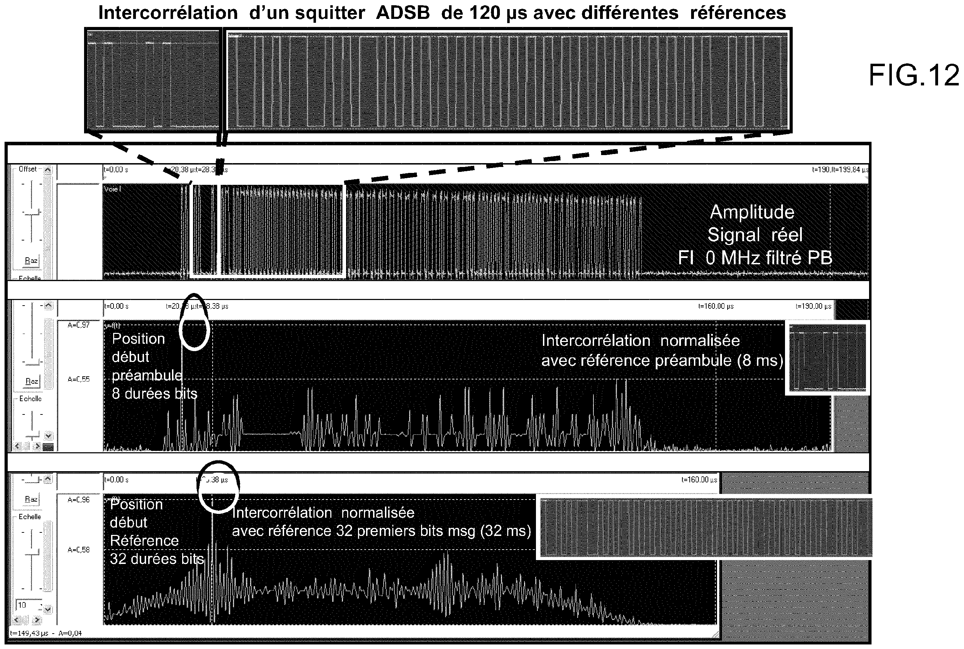

- Pour la figure 1, un schéma d'architecture générique pour un système de traitement selon l'invention,
- Pour la figure 2, la structure de modulation PPM et la structure d'un squitter ADS-B dans un exemple de mise en œuvre de l'invention, mettant en exergue les invariants d'enveloppes et de contenus, complétée par des exemples de représentations spectrales des impulsions du signal ADS-B ou TIS-B
- Pour la figure 3, la structure fine d'un message ADS-B (illustration sur le cas du message de position et du signal associé), mettant en exergue les contenus stationnaires et les contenus quasi-stationnaires à l'échelle d'une durée de traitement de quelques minutes).
- Pour la figure 4a, une analyse de la structure des squitters et un exemple de démodulation des messages ADS-B, puis une reconstitution de signaux de références simples et étendus dans le cadre du procédé selon l'invention, à partir de séquences de signaux de préambule prédéfinies pour la synchronisation des signaux ADS-B et à partir de champs discriminants et stationnaires codés dans les messages ADS-B et TIS-B tel que l'adresse ICAO de 24 bits (à laquelle on a ajouté sur la figure 4a les champs DF, puis CA, CF, etc.) qui restent invariants pour un même émetteur ADS-B ou TIS-B. Cette reconstitution de signaux de référence s'effectue soit par prélèvement direct sur le signal, soit par reconstitution de champs connus/supposés a priori ou déjà démodulés/décodés au moins une fois)
- Pour la figure 4b, une analyse d'une impulsion PPM utilisée pour la modulation du squitter ADS-B
- Pour la figure 5, une description du multitramage GSM et une visualisation des différentes phases d'accès radio du GSM sur des signaux réels,
- Pour la figure 6, une analyse temporelle des slots, trames, des redondances des enveloppes et des contenus dans les signaux GSM,
- Pour la figure 7, un exemple de mise en œuvre de la variante selon l'invention par exploitation du tramage des émissions de signalisation dédiée précédent l'établissement du trafic GSM, et d'une grille temps-fréquence pour une application optimisée des processus de radiométrie ou de filtrage adapté, puis de post-intégration long terme sur ces signaux,
- Pour la figure 8, un exemple de mise en œuvre de la variante selon l'invention par exploitation du tramage des émissions de trafic GSM et d'une grille temps-fréquence pour une application optimisée des processus de radiométrie, puis de post-intégration long terme sur ces signaux,
- Pour la figure 9, un exemple de mise en œuvre de la variante selon l'invention par exploitation du tramage des émissions de trafic GSM et d'une grille temps-fréquence pour une application optimisée des processus de filtrage adapté et de post-intégration long terme,
- Pour la figure 10, un exemple de mise en œuvre du procédé selon l'invention pour des signaux UMTS UL,
- Pour les figures 11a, 11b, 11c, trois exemples de procédés de détection et synchronisation « élémentaires », connus de l'homme de l'art, pouvant être appliqués dans le cadre de la mise en œuvre de l'invention,
- Pour la figure 12, un exemple non limitatif de mise en œuvre de l'invention sur signaux ADS-B pour la constitution de signaux de référence étendus (illustrée figure 4a) et l'exploitation de ces signaux ;

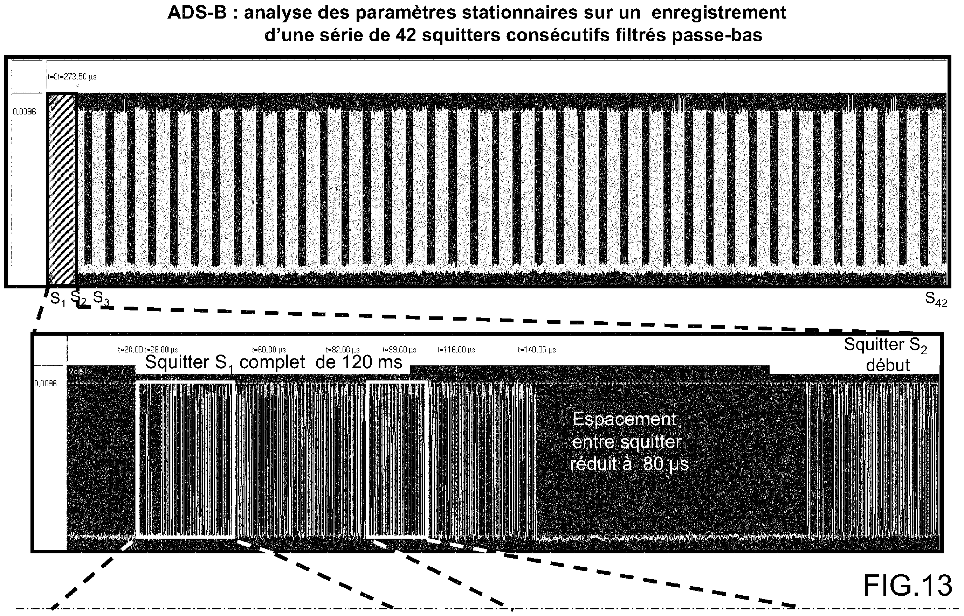

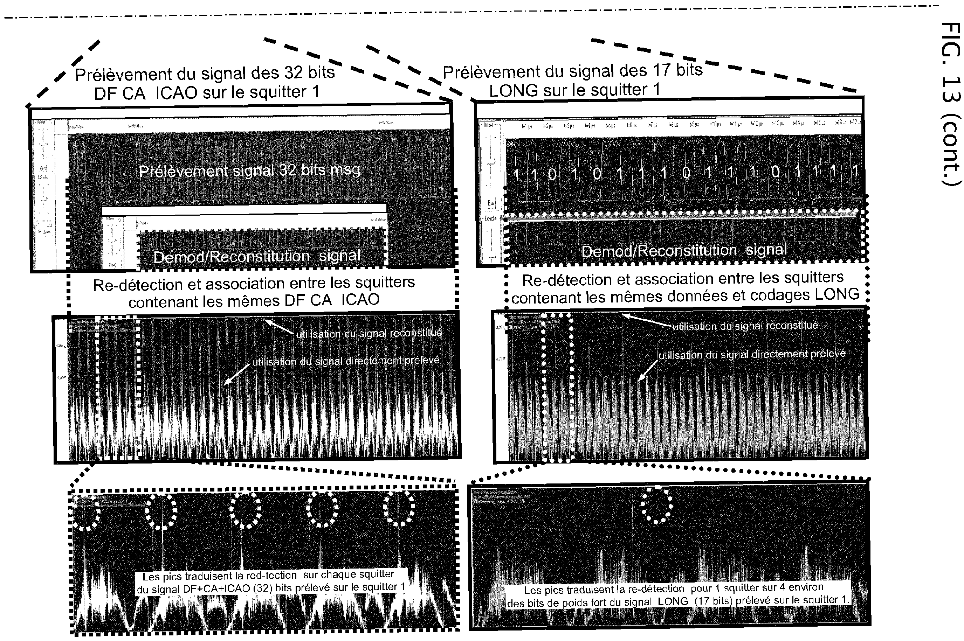

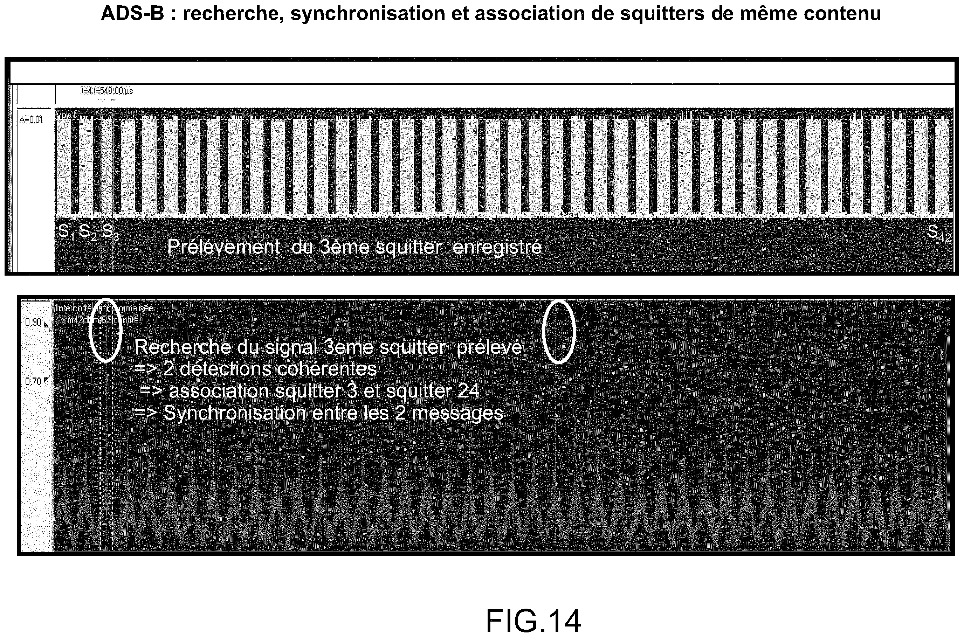

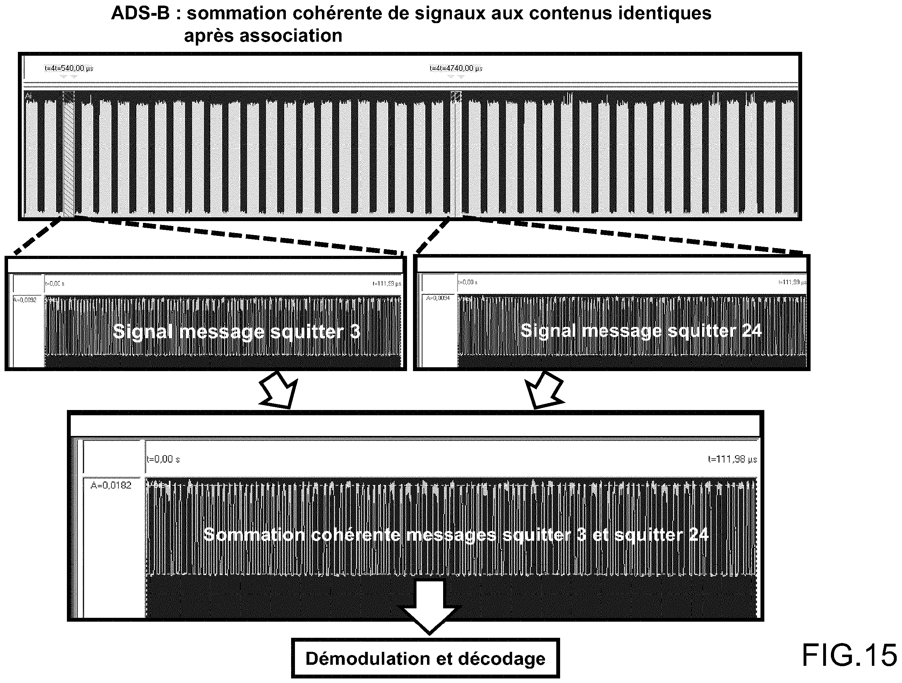

- Pour la figure 13, un exemple non limitatif de mise en œuvre de l'invention sur signaux ADS-B associant les signaux entre eux et à un même émetteur grâce à mise en évidence d'une répétition de contenus stationnaires (champs DF CA ICAO), partiellement stationnaires ou quasi-stationnaires (champ LONG, LAT), d'après un prélèvement sur le signal originel ou d'après une démodulation/reconstitution du signal de référence selon le procédé illustré à la figure 4a,
- Pour la figure 14, un exemple non limitatif d'application de l'invention pour la recherche, la synchronisation et l'association de signaux ADS-B/TIS-B aux contenus identifiants stationnaires (squitter d'identité).
- Pour la figure 15, un exemple non limitatif d'application de l'invention sur des signaux ADS-B pour la sommation cohérente, avant démodulation et décodage, de signaux aux contenus stationnaires, ces signaux étant préalablement synchronisés et associés comme sur la figure 13 ou sur la figure 14.

Afin de mieux faire comprendre le fonctionnement du procédé selon l'invention, l'exemple qui suit va être donné à titre illustratif et nullement limitatif pour un signal ayant une structure stationnaire, partiellement stationnaire ou quasi-stationnaire dans le temps. De manière générale, sans sortir du cadre de l'invention, le procédé peut s'appliquer à tout type de signaux ayant une structure connue ou des contenus connus, ou simplement des contenus dont seule la répétition est connue, dès lors qu'il existe une stationnarité partielle ou une variabilité lente (prédictible à moyen ou long terme), pour associer de manière fiable les résultats produits par le capteur ou les capteurs du système de capteur sur la base de critères portant sur les structures et/ou sur des contenus des signaux provenant des mêmes émetteurs.

La figure 1 illustre schématiquement un récepteur équipé d'un système de traitement pouvant mettre en œuvre l'invention. Ainsi, le dispositif comprend un récepteur 1 ou plusieurs récepteurs 1, 1', 1" etc., adaptés à recevoir les signaux à analyser, un processeur 2 recevant les signaux captés par le ou les récepteurs et un espace de mémorisation 3, pouvant servir par exemple à conserver les signaux reçus par les récepteurs et qui sont en attente de traitement, ainsi qu'une base de données 4 décrivant par exemple, les caractéristiques des signaux en relation avec une norme, la structure même des signaux, certains contenus connus a priori dans les signaux, certaines répétitions connues de contenus eux-mêmes connus ou inconnus. L'espace de mémorisation peut ainsi contenir un tableau ou une base de données regroupant un signal défini par ses caractéristiques connues de structure, ses contenus connus, l'émetteur associé audit signal, les réseaux exploitant ces émetteurs, etc.

Pour l'exemple, le signal ADS-B et TIS-B est un signal d'identification automatique plus particulièrement utilisé dans des échanges entre avions et tours de contrôle. Dans ce cas précis comme dans le cas de nombreux autres réseaux et services de communication (AIS, PMR, GSM, etc.), les émetteurs respectent des schémas particuliers de redondance et de répétition des informations, notamment les schémas qui sont liés à la signalisation diffusée ou dédiée au trafic, à l'identification de la nature des messages, à l'identification des émetteurs, parfois même à la position des émetteurs. Pour la mise en œuvre de l'invention dans le cadre de réseaux tels que l'ADS-B, ces schémas de transmission de données sont repérables dès les phases de synchronisation sur les signaux grâce à des marquants de nature hybride numérique/symbolique spécifiques et de combinatoire faible. Ces marquants et leurs répétitions sont connus à l'avance ou prédictibles avec une faible combinatoire par consultation des normes ou des documents de spécifications techniques lorsqu'ils sont accessibles; ces marquants et leurs répétitions sont aussi fréquemment repérables directement sur les signaux eux-mêmes sans accès aux bases de données ni accès au contenu des messages. Ces marquants et informations de répétition figureront typiquement dans la base de données 4.

Un exemple de mise en œuvre du procédé pour un signal message de type ADS-B est illustré aux figures 2 et 3.

La figure 2 montre les structures d'enveloppes et de modulation des préambules et des messages ADS-B et TIS-B. La figure 3 montre les contenus des messages correspondant aux émissions ADS-B et TIS-B, et met en exergue les contenus stationnaires et les contenus quasi-stationnaires. La figure 4a montre aussi une visualisation du signal ADS-B correspondant à un préambule + message ADS-B (pendant une durée de 8 microsecondes + 112 durées bits soit 120 microsecondes) reçu sur un récepteur, signal à partir duquel on démodule puis on reconstitue les différentes composantes stationnaires ou quasi-stationnaires de l'enveloppe et du contenu (dans cet exemple, la partie stationnaire du contenu est constituée des quatre impulsions du préambule et des 32 premiers symboles du message).

L'idée principale du procédé selon l'invention va donc être d'associer différents signaux reçus sur un capteur ou sur plusieurs capteurs d'un système, à un même émetteur discriminé $E_i$, et ce, sans avoir à effectuer ni démodulation ni décodage préalables de ce signal.

Pour cela, l'invention met en œuvre un test de vraisemblance, qui porte sur les différentes caractéristiques d'enveloppe et de contenu du signal selon les cas :

Cas A- dit « coopératif » : Les tests de vraisemblance portent sur les contenus du signal et sur la redondance de ces contenus : la détection de présence d'un contenu particulier dans les signaux permet de discriminer et de dénombrer les différents émetteurs, d'estimer divers paramètres (synchronisation et TOA/TDOA, paramètres de modulation, estimation de canal de propagation, DOA etc.) sur les signaux véhiculant ces contenus particuliers (ce qui permet en quelque sorte de « labelliser » les résultats d'estimateurs) ; la détection d'une répétition de ces contenus permet d'associer plusieurs signaux à un même émetteur, etc. Tout ceci se met en œuvre dans le cadre de l'invention à partir de techniques de filtrage adapté et d'intercorrélation connues de l'homme de l'art, comme illustré aux figures 4a, 11a et 12,

et/ou

Cas B- dit « aveugle » Les tests de vraisemblance portent sur les paramètres de structure du signal perceptibles sur l'enveloppe de l'amplitude ou de l'énergie du signal d'entrée ou sur l'enveloppe de amplitude ou de l'énergie d'un signal de sortie obtenu à partir du signal d'entrée au moyen d'une transformation appropriée : ces tests permettent de vérifier le respect d'une synchronisation par rapport à une trame, par rapport à une multitrame ou par rapport à une hyper-trame prédéfinies, de vérifier le respect d'un plan de fréquence prédéfini ; ils permettent de renforcer la vraisemblance de l'association du signal à un émetteur ; ceci se met en œuvre dans le cadre de l'invention principalement par l'exploitation d'une grille temps fréquence indexée sur les paramètres de trame, de super trame et de multitrame, comme illustré aux figures 7, 9 et 10.

En considérant le cas « coopératif » A- avec une réception sur un réseau antennaire ou sur différentes voies de réception (haut, bas, somme différence, autres...), un exemple non limitatif de technique mise en oeuvre est le procédé connu de l'homme de l'art décrit dans le brevet FR 2 909 772, un autre exemple, toujours non limitatif, de mise en œuvre est une généralisation de l'intercorrélation entre les échantillons numériques du vecteur signal reçu x et d'une réplique d d'un signal « attendu », préalablement enregistrée, préalablement connue ou préalablement supposée, dans une approche de filtrage adapté sur réplique, synthétisé sur la figure 11a. Le cas où le réseau antennaire ne comporte qu'un seul élément correspond alors au filtrage adapté temporel (ou intercorrélation normalisée) du signal monodimensionnel x par la réplique d.

En considérant le cas « aveugle » B- avec une réception sur un réseau antennaire, l'une des techniques mises en oeuvre peut être celle de la détection d'énergie ou de front par le procédé du radiomètre faisant suite à une formation de voie adaptative sur les échantillons numériques du vecteur signal reçu $\underline{x}$; l'ensemble est synthétisé sur la figure 11b. Le cas où le réseau antennaire ne comporte qu'un seul élément correspond au radiomètre classique illustré sur la figure 11c.

Un autre exemple possible de mise en œuvre sur différentes voies de réception (haut, bas, sommes différence, autres...), toujours non limitatif, est le procédé connu de l'homme de l'art enregistré sous la référence FR 2 909 772.

Variante I pour la réalisation du test de vraisemblance en exploitant un a priori signal (cas coopératif) ou une a-priori direction d'arrivée (cas aveugle).

Pour expliciter ces procédés non limitatifs, notons

$\underline{x}$: le vecteur signal en entrée sur le réseau antennaire, de taille Nx1, N prenant toute valeur supérieure ou égale à 1, ramené en bande de base, et formulé selon le modèle $\underline{x} = A.s + \underline{b}_T$, où

le vecteur des signaux utiles (y compris interférences corrélées, multi-trajets corrélés éventuels) est noté s, le vecteur de (bruit + brouillages) centré, dé-corrélé de s est noté $\underline{b}_T$, la matrice de mélange A, de taille NxP est composée de vecteurs directeurs normalisés $\underline{a}_p(_\Theta p, \tau_p)$ associés aux directions d'arrivée $\Theta_p$, et aux instants d'arrivée $\tau_p$ en nombre P : A = $[\underline{a}_1(\Theta_1, \tau_1),...,\underline{a}_p(\Theta_p, \tau_p)]$ (cas mono-source monotrajet : P = 1), le rapport signal à bruit + brouilleur est défini de manière simplifiée dans le cas mono-trajet par $\rho_{RSB} = E[|s(t)|^2]/E[|b_T(t)|^2]$, avec E[] l'espérance

$\underline{x}(kT_e)$: l'échantillon de signal $\underline{x}$ en entrée sur le réseau antennaire pris à l'instant d'échantillonnage $kT_e$, correspondant aux échantillons de signal utile $\underline{s}(kT_e)$ et de bruit + brouillages $\underline{b}_T(kT_e)$, $T_e$ étant la période d'échantillonnage utilisée pour une implantation numérique du procédé,

K : le nombre de symboles indépendants pour la durée d'intégration cohérente « court terme »

K' : le nombre d'itérations pour les intégrations « long terme », cohérentes ou incohérentes selon les variantes du procédé décrites dans la suite,

d : la signal réplique du signal recherché dans le signal utile s, de durée $T_K$, correspondant à K symboles indépendants dans le cas d'un signal modulé

$\mathbf{R_{xx}}$: la matrice de covariance sur signal x, de taille NxN, calculées sur K" symboles indépendants, et définie à l'instant $t_0 = k_0T_e$ par $\mathbf{R_{xx}}(k_0T_e) = E[\underline{x}(t) \underline{x}(t)^H] = (1/K").\sum_{1,...,K"} \underline{x}((k_0+k)T_e).\underline{x}((k_0+k).T_e)^H$ ($^H$ désignant le produit hermitien entre vecteurs)

$\mathbf{r_{xd}}$: le vecteur signal intercorrélé en entrée, de taille Nx1, défini à l'instant $t_0 = k_0T_e$ et intégré sur K symboles

indépendants par $\underline{\mathbf{r}}_{\mathbf{xd}}(k_0 T_e) = E[\underline{x}(t).d(t)] = (1/K).\sum_{1,...,K} \underline{x}((k_0+k).T_e).d(k.T_e)$

Dans le cas A- « Exploitation d'un a-priori signal », comme le montre la figure 11a, la détection et la synchronisation de la référence d surviennent lorsque à un instant $t_0 = k_0 T_e$ donné, le critère suivant du Filtre Adapté Spatial sur Réplique (ou FAS-R), noté $C(k_0 T_e)$, qui, à l'instant de synchronisation $k_0 T_e$, s'avère être homogène à l'énergie de la réplique dans la résultante filtrée $y(k_0 T_e)$ du signal reçu x, dépasse un seuil $\eta_{FAS-R}$ fixé :

$$y(k_0 T_e) \quad = ([\underline{\mathbf{R}}_{\mathbf{xx}}(k_0 T_e)]^{-1} \underline{\mathbf{r}}_{\mathbf{xd}}(k_0 T_e))^H .\underline{x}(k_0 T_e) : \text{signal filtré résutant}$$

$$C(k_0 T_e) \quad = (1/K).\sum_{1,...,K} \underline{y}((k_0+k).T_e).d(k.T_e) : \text{énergie de d dans y}$$

$$= \underline{\mathbf{r}}_{\mathbf{xd}}(k_0 T_e)^H . [\underline{\mathbf{R}}_{\mathbf{xx}}(k_0 T_e)]^{-1} . \underline{\mathbf{r}}_{\mathbf{xd}}(k_0 T_e) \quad > \eta_{FAS-R}$$

Dans le cas B- « Exploitation d'un a-priori direction d'arrivée », comme le montre la figure 11b, la détection de l'énergie du signal et la synchronisation de la référence d surviennent dans la voie formée p correspondant au vecteur de pointage $\underline{a}'_p(\Theta'_p)$ associé à la direction supposée $\Theta'_p$, lorsqu'à un instant $t_0 = k_0 T_e$ donné, le critère $A(\underline{a}'_p(\Theta'_p), k_0 T_e)$ sur le signal $s'_p(\Theta'_p, k_0 T_e)$ en sortie de voie p, tel que défini ci-dessous, dépasse un seuil $\eta_{radio}$ fixé :

$$s'_p(\Theta'_p, k_0 T_e) = ([\underline{\mathbf{R}}_{\mathbf{xx}}(k_0 T_e)]^{-1} \underline{a}'_p(\Theta'_p))^H .\underline{x}$$

$$A(\underline{a}'_p(\Theta'_p), k_0 T_e) = E[(s'_p(\Theta'_p, k_0 T_e))^H .(s'_p(\Theta'_p, k_0 T_e))] \quad > \eta_{radio}$$

Comme le monte la figure 11c, le radiomètre classique correspond au cas particulier B- où le réseau antennaire est réduit à un seul élément (N=1).

A titre d'exemple non exhaustif, un signal de type ADS-B reçu au niveau du récepteur est comparé grâce à un logiciel intégré dans le processeur aux structures de signaux mémorisés dans la base de données, selon les processus d'intercorrélation ou de radiométrie décrits ci-dessus. Pour un signal de type ADS-B, il est possible de choisir pour paramètres de reconnaissance de l'association émetteur-signal :

- la structure d'enveloppe caractéristique du tramage ADS-B avec le préambule fixé suivi d'un message de 112 bits de modulation PPM avec des pulse de largeur de bande 2MHz tel que décrit figure 2
- la valeur exacte du préambule, au moyen d'une synchronisation par filtrage adapté, comme sur la figure 12, ou comme dans brevet EP2010/055118.
- certains paramètres stationnaires ou explorables avec une faible combinatoire dans les premiers bits codés des messages (champs DF, CA, CF, adresse ICAO, codés dans l'exemple des figures 4 et 12 sur les 32 premiers symboles du message, etc.), pour une synchronisation renforcée par filtrage adapté sur ce signal de référence étendu, comme sur la figure 12 Ceci permet avantageusement de mettre en œuvre le procédé d'intercorrélation élémentaire des signaux ADS-B avec des séquences différentes et étendues pour une première prise de synchronisation très efficace dans le cas A- précédent, ainsi que le montre la figure 12: discrimination des différents signaux, comparaison des concordances entre la synchronisation de ces signaux et les structures de trame, etc.
- la ou les portions de signal qui contiennent un paramètre identificateur ou discriminant de l'émetteur, paramètre pouvant être détecté sans démoduler le signal correspondant (cas A-), comme sur les figures 4a, 12 13 et 14. Les portions de signal particulièrement intéressantes dans le cas ADS-B (exemples non exhaustifs) sont les suivantes :
- le préambule présent sur les 8 premières micro-secondes du squitter;
- les 32 premiers bits de chaque message, contenant entre autres l'adresse ICAO de l'émetteur (indiquant le pays d'origine la compagnie, etc.), répété sur tous les squitters ainsi que le montrent les figures 12 et 13,
- l'ensemble du message du squitter d'identification de 48 bits émis régulièrement dans la trame ADS-B (le message d'identification est présent sur les 3<sup>eme</sup> et 24<sup>eme</sup> squitters de l'ensemble de signaux représenté aux figures 14 et 15),
- les bits de poids les plus forts dans les messages de position véhiculant les informations de latitude longitude (données lentement variables durant le trajet de l'avion) contenus dans les messages transmis (voir l'exemple de la latitude et longitude aux figures 3 et 13).
- les champs de vitesse et de route (données quasi-invariantes dans les phases de croisière d'un trajet de l'avion), contenus dans les messages transmis (squitter de vitesse ADS-B)
- tout champ dans le message qui contient un paramètre représentatif pouvant être détecté sans démoduler le signal, en travaillant uniquement sur l'amplitude du signal, sur le spectre du signal ou sur l'intercorrélation des signaux bruts échantillonnés avec des séquences de référence à combinatoire limitée.

Variante II de réalisation en contexte coopératif exploitant des caractéristiques d'enveloppes connues et des contenus connus : ADS-B, TIS-B, AIS, GSM, DVB, UMTS (3GPP), CDMA 2000 (3GPP2), Wimax, LTE etc.

Selon un autre mode de réalisation, le procédé va exploiter les caractéristiques de répétition, de multiplexage et de multi-tramage du réseau de communications, caractéristiques qui sont dans cette variante liées aux caractéristiques connues du protocole d'accès réseau, par exemple, les différents schémas de répétition et de multiplexage possibles des messages dans les multi-trames.

Dans les phases protocolaires d'accès des terminaux aux réseaux de communication, les phases de négociation puis les phases d'établissement, les émetteurs respectent des schémas particuliers de répétition, de tramage et de multiplexage dans les trames et multi-trame, qui se traduisent par des redondances de contenus et par des « patterns » temps-fréquence spécifiques et de combinatoire faible.

De tels schémas sont connus à l'avance, par consultation des normes ou des documents de spécification techniques lorsqu'ils sont accessibles. Ils sont même parfois repérables dans certains cas directement sur les signaux eux-mêmes par quelques analyses préalables avant la mise en œuvre du procédé selon l'invention.

Un premier exemple de mise en œuvre du procédé selon l'invention est donné aux figures 5, 6, 7 et 8 dans le cas du GSM dont les structures de multi-trame 51 et de multi-trame 26 sont explicitées sur les figures 5 et 6.

Les figures 5, 6 et 7 représentent :

- la phase d'accès (ACH, un burst) au middamble caractéristique,
- la phase de négociation (SDCCH) à la structure burstée caractéristique (série de 4 bursts sur 4 trames consécutives indexées sur des périodicités multi-trame 51 précises),
- le début de la phase de trafic à la structure burstée caractéristique (série de 26 bursts sur 26 trames consécutives avec de chaque Multitrame 26, un slot de signalisation au milieu -trame n°13 modulo (26)- et un manque à la fin -trame n°25 modulo (26)- , comme montré sur la figure 6), indexé sur la période de la multi-trame 26,

Ces diagrammes ou patterns visibles apparaissent sur la figure 7 par une simple représentation temps fréquence qui permet d'associer sans équivoque ces signaux impulsionnels à un même émetteur une fois la détection élémentaire réalisée, par exemple par l'un des procédés décrits plus haut, de chacun des signaux impulsionnels.

Par ailleurs, la figure 8 comme la figure 9, montrent comment la connaissance du plan de fréquences des émetteurs (ici des cellules et des mobiles GSM), obtenue par relevé préalable ou à partir d'une base de données, peut être une aide supplémentaire pour la sélection des fréquences et pour la mise en place du procédé précédent sur les émissions à agilité de fréquence.

Dans le cas des figures 7 et 8, la détection élémentaire est réalisée en mettant en œuvre les étapes de détection au moyen d'une grille temps-fréquence et d'une détection d'énergie telle qu'explicitée plus haut (radiomètre) dans chaque case de la grille temps fréquence : cette approche peut être utilisée « à l'aveugle » pour tous types de signaux fixes ou à agilité dont les structures slot, trame, multitrame connues permettent de construire et de rechercher la concordance d'une grille temps / fréquence avec le signal enregistré et présenté sur une visualisation adaptée comme sur les figures 7 et 8.

Toutefois, lorsque des informations additionnelles sont a priori disponibles sur le contenu des signaux, la détection élémentaire peut de même être mise en œuvre de manière « coopérative » plus performante par filtrage adapté comme sur la figure 9, en exploitant la connaissance a priori sur la structure du contenu de certains signaux présents comme il a été explicité précédemment pour les signaux ADS-B. Sur la figure 9 les contenus connus a priori sont notamment les middambles présents au milieu des slots GSM pour la re-synchronisation et les processus d'égalisation prévus par la norme dans les terminaux et dans les stations de base GSM.

Un second exemple de mise en œuvre coopérative du procédé selon l'invention est donné à la figure 12 relativement aux signaux ADS-B et TIS-B, en exploitant le préambule et les champs stationnaires explicités sur les figures 2 et 3, notamment les adresses ICAO codées sur les bits 9 à 32 des squitters ABS-B et TIS-B. Sur cet exemple, une mise en œuvre plus poussée du procédé consiste à allonger la séquence discriminante initialement constituée du préambule, en incluant par exemple les paramètres de format codés sur les bits 1 à 9 du message (toujours définis à la figure 2), afin de gagner en gain de traitement de détection « élémentaire » tout en limitant les ambiguïtés et en améliorant la fausse alarme grâce à cet allongement. Cette mise en œuvre plus poussée revient à introduire un facteur de gain supplémentaire dans l'intégration cohérente et un critère de sélectivité supplémentaire dans la post-intégration. Elle permet aussi d'initialiser une démodulation et un décodage sur des données connues, avant de poursuivre la démodulation et le décodage sur les données à priori inconnues constituées par les 56 symboles du champ « ADS-B message ME field » indiqué figure 3.

La variante « coopérative », dans sa version basique comme sur la figure 9 ou dans un variante plus poussée comme sur la figure 12 s'applique à de très nombreux signaux standardisés, les signaux ADS-B/ TIS-B et GSM cités ci-dessus en sont des exemples non exhaustifs, les signaux UMTS Downlink, AIS, DVB-T, DVB-H, DRM, DMR, WiFi, WIMAX, CDMA 2000 Downlink, LTE etc. constituent d'autres exemples.

Comme aux variantes précédentes, le procédé repose sur l'utilisation de la prédictibilité à combinatoire nulle ou très faible des patterns exploités, et ce indépendamment de la complexité de l'environnement radioélectrique lui-même. Ceci rend possible la mise en œuvre de l'invention dans les cas de réception les plus complexes.

Variante III de réalisation en contexte semi-coopératif, exploitant les répétitions connues de contenus - exemple UMTS Uplink

La figure 10 représente une variante du procédé selon l'invention dans le domaine de l'UMTS sens uplink. Dans cette variante de l'invention, le procédé exploite de manière très poussée les caractéristiques des répétitions de contenus, les caractéristiques de multiplexage et de multitramage du réseau de communication au protocole CDMA, caractéristiques qui sont, dans cette variante liées aux structures et aux répétitions connues des codes de scrambling et des symboles pilotes dans les slots de la trame, répétitions explicitées sur la figure 10.

Dans le cas d'une application à des signaux UMTS Uplink (Universal Mobile Télécommunication System, sens mobile vers station...) les signaux émis par des terminaux mobiles UMTS présentent des symboles pilotes répétés de trame à trame, prédictibles avec une faible combinatoire (12 formats slots), émis sur le canal de contrôle DPCCH, en quadrature des symboles aléatoires de trafic émis sur le canal de trafic DPDCH (voir figure 10).

Grâce à la connaissance a priori de la structure des codes de scrambling, des symboles pilotes ainsi que des différents schémas de répétition et de multiplexage dans les canaux de contrôle tels qu'indiqués sur la figure 10, les symboles pilotes sont détectés et reconnus par la mise en œuvre du procédé selon l'invention.

En effet les codes de scrambling, a priori inconnus mais de structure et longueur connues, sont répétés, soit à chaque période symbole du canal de contrôle (codes courts), soit à chaque trame (codes long). Les séries de symboles pilotes prennent 12 formats de valeurs et multiplexage possibles définis par la norme (indiqués sur la figure 10), enfin pour chacun des slots de la trame (correspondant à une communication) correspond l'un des 12 formats prédéfinis, répété sur le slot correspondant de chaque trame. Ainsi, les valeurs du signal total (symboles multipliés par chips) correspondant aux symboles pilotes d'un slot dans la trame sont

- identiques pour une position donnée dans la trame, d'une trame à la suivante,
- prédictibles sur la durée d'un slot, d'un symbole pilote au suivant, pour un format slot donné.

Il est donc possible de conduire un processus d'intégration cohérent exploitant les périodicités et déterminismes sous jacents des symboles, des slots, et des trames prédéfinies dans la norme UMTS, processus dont le résultat est montré figuré au bas de la figure 10 et commenté ci-dessous :

- Les parties déterministes du signal, qui correspondent aux symboles pilotes dont le format supposé parmi les 12 formats prédéfinis correspond au format effectivement présent dans le signal traité, sont sommées de manière cohérente (sommation de contributions détermistes, et ce, seulement lorsque l'hypothèse du format slot est valide).
- Les parties aléatoires du signal correspondant aux symboles variant au cours du temps ou aux hypothèses non valides sur le format slot sont sommées de manière incohérente (sommation de contributions non détermistes).

Les transitions entre parties cohérentes et incohérentes permettent de déterminer la longueur et le début des séries de symboles pilotes ce qui entraîne de nombreux avantages, par exemple :

- améliorer la sensibilité de la détection du signal grâce au procédé de sommation cohérente sur les symboles pilotes de trame en trame,
- déterminer la synchronisation symbole et chip,
- déterminer le code de scrambling court ou remonter à l'état initial du code de scrambling long en exploitant la succession de chips sur une ou plusieurs durées des symboles pilotes (procédé connu de l'homme de l'art, explicité par exemple dans l'article de référence suivant « "Triple correlation analysis of binary sequences for codeword détection", IEE Proc.-Vis. Image Signal Process., Vol. 141, No5, October 1994)
- déterminer le début de trame puis démoduler le signal complet, une fois obtenues les caractéristiques, initialement inconnues, des codes de scrambling,
- etc.

Le procédé selon l'invention, par exploitation des répétitions connues des signaux, permet ainsi une synchronisation sur le chip, le symbole puis la trame UMTSUL, sans connaître a priori le code de scrambling appliqué ni la synchronisation, puis il permet de retrouver les synchronisations et le code de scrambling pour désétaler et démoduler le signal.

Variante IV générique en contexte aveugle ou coopératif exploitant une grille temps fréquence prédéfinie

Selon un mode de réalisation précédemment évoqué dans certains cas d'application, une variante de réalisation repose sur l'utilisation d'une grille temps fréquence pour améliorer conjointement les étapes de détection et de synchronisation avec l'étape d'association entre les signaux et les émetteurs.

La détection par filtrage adapté d'une réplique du signal est utilisée quand des informations a priori sont disponibles sur le contenu de la forme d'onde. Comme on l'a montré ci-dessus, et comme l'explicite visuellement la figure 11a, elle peut être réalisée sur les signaux réels par un calcul d'intercorrélation en sortie de filtrage adapté spatial par un signal de référence d et par application manuelle ou automatique d'un seuillage au critère de sortie explicité précédemment $C(k_0 T_e)$, qui, à l'instant de synchronisation $k_0 T_e$, s'avère être homogène à l'énergie de la réplique d dans la résultante filtrée y du signal reçu x.

La détection d'énergie ou la détection sur front des signaux impulsifs est utilisée quand très peu d'informations sont disponibles sur les contenus de la forme d'onde. Comme on l'a montré précédemment, et comme l'explicitent visuellement les figures 11b et 11c, elle peut être réalisée sur les signaux échantillonnés ou sur un calcul de spectre de ces signaux par application manuelle d'un seuillage, ou bien automatiquement avec un test d'hypothèses sur la présence ou non d'un signal à partir d'un calcul de son énergie ou de sa densité spectrale de puissance, d'une intégration en temps et d'une comparaison avec un seuil, ce qui est le principe du radiomètre. La synchronisation découle généralement de la détection sur front dès que le front est suffisamment net.

A partir d'un critère coopératif en sortie de traitement d'antenne comme sur la figure 11a, ou a partir d'un critère énergétique aveugle en sortie de traitement d'antenne comme sur les figures 11b et 11c, la détection par filtrage adapté ou par radiomètrie utilise le modèle classique de la détection probabiliste monosource d'un signal s(t) déterministe dans un bruit généralement supposé blanc gaussien centré, en exploitant des triplets de paramètres liés entre eux (η, Pd, Pfa) qui sont le seuil de détection η, la probabilité de fausse alarme Pfa, la probabilité de détection Pd. Le processus de détection est basé sur une détection d'énergie modélisée par une décision face à deux hypothèses possibles : la présence ou l'absence du signal s(t). La décision repose sur la comparaison, sur une durée d'observation T, du critère de détection coopératif ou aveugle, généralement homogène à l'amplitude ou à l'énergie du signal d'entrée, par rapport au seuil de détection η, dépendant de la probabilité de détection Pd et de la probabilité de fausse alarme Pfa, elles-mêmes définies en fonction de l'énergie du bruit et de sa distribution d'amplitude selon des formulations bien connues de l'homme de l'art.

En introduisant, dans ces processus bien connus de l'homme de l'art (tels que décrits en figures 11a, 11b, 11c), la connaissance a priori sur le tramage et l'enveloppe temps fréquence des signaux, ainsi qu'il est montré sur les figures 5 à 9 par exemple, le procédé selon l'invention permet de renforcer notablement les performances sur les signaux dont l'enveloppe temps fréquence est périodique ou récurrente, et de renforcer tout particulièrement les performances sur les signaux agiles en fréquence.

Pour cela, le procédé selon l'invention va exploiter une grille temps-fréquence glissante dans le domaine temporel, le cas échéant glissant aussi dans le domaine fréquentiel, et indexée sur les périodicités de trame et/ou sur les plans de fréquence connus des émissions (en tenant compte des écarts Doppler maximums dans la définition de la grille).

Le glissement de la grille dans le domaine temporel est limité aux plus petites récurrences temporelles qui doivent être prises en compte ; le glissement de la grille dans le domaine fréquentiel est limité aux écarts Doppler maximaux qui doivent être prises en compte en raison du mouvement de la cible et en raison des incertitudes sur les chaînes radioélectriques ou acoustiques exploitées pour la mise en oeuvre de l'invention. C'est là l'un des avantages de l'invention qui permet de limiter le domaine temporel et fréquentiel de recherche.

Le procédé pour la mise en œuvre de cette variante de réalisation exécute au moins les cinq étapes principales :

1- Application, à une position de synchronisation supposée, d'une grille temps fréquence indexée sur la trame connue et/ou sur le plan de fréquence connu/supposé.

à chaque instant de synchronisation testé ou supposé pour la grille :

2- parallélisation du processus de détection sur chaque slot/trame définie par la grille :

- filtre adapté spatial sur réplique ou intercorrélation dans le cas coopératif lorsque des répliques du signal sont connues, comme décrit à la figure 11a

- formation de voie sur hypothèse direction d'arrivée et radiomètrie dans la voie formée, comme décrit à la figure 11b,
- radiomètrie dans la voie de réception, comme décrit à la figure 11c Nota : la grille définit de ce fait les durées d'intégration maximales des processus ci-dessus, ce qui a notamment pour conséquence de limiter leur complexité.

3- Vérification de la concordance des positions de synchronisation obtenues et de leur périodicité modulo les périodicités slot/trame/fréquences définies par la grille. Cette vérification de concordance peut s'effectuer

- soit de visu par un opérateur contrôlant la mise en œuvre de l'invention au moyen de représentations adaptées des signaux et des estimateurs appliqués (de telles représentations adaptées sont par exemple celles des figures 5 à 9),
- soit automatiquement par des algorithmes bien connus de l'homme de l'art (intégrateurs, histogrammes), testant les périodicités des détections et des synchronisations obtenues, et leur concordance aux caractéristiques définies par la grille.

4- Si non-concordance ou mauvaise concordance : test de l'hypothèse de synchronisation grille suivante (glissement de 1 échantillon temporel ou fréquentiel de la grille).

5- Si concordance : post-intégration aux positions de synchronisation et aux fréquences définies par la grille qui correspondent aux détections, avec les deux variantes mentionnées aux figures 8 et 9, et explicitées ci-dessous :

**Post intégration d'après la grille, variante 1** : optimisation a posteriori de la probabilité de détection et de la probabilité de fausse alarme en considérant L décisions concordant à la grille parmi K' itérations. Les lois approximatives suivies par les probabilités post-intégrées $Pd_{K',L}$ et $Pfa_{K',L}$ pour au moins L décisions sur K' réalisations sont les suivantes (dans les formulations approchées connues de l'homme de l'art ci-dessous, les décisions individuelles sont supposées indépendantes et à Pfa et Pd constantes quelles que soient leur positions dans la grille - simplification non limitative) :

Probabilité d'avoir moins de L fausses alarmes parmi K' itérations du critère :

$$Pfa_{K',L} = \Sigma_{0 \leq l \leq L} \ C_{K'}^{l} . \ Pfa^{l} . (1-Pfa)^{K'-l}$$

Probabilité d'avoir au moins L détections parmi K' itérations du critère :

$$Pd_{K',L} = \Sigma_{L \leq l \leq K'} \ C_{K'}^{l} . \ Pd^{l} . (1-Pd)^{K'-l}$$

**Post intégration d'après la grille, variante 2** : optimisation a posteriori du rapport signal à bruit par K' accumulations du critère aveugle ou coopératif avant décision (intégration -incohérente- du de l'amplitude ou du carré du critère individuel sur K' itérations). La loi approximative suivie par le rapport signal à bruit de la variable en sortie (critère et intégré) est alors la suivante (dans la formulation approchée connue de l'homme de l'art ci dessous, les signaux sont supposés d'amplitude constante et faible devant le bruit originel blanc centré, et les décisions individuelles supposées indépendantes et à Pfa et Pd constantes quelles que soient leur positions dans la grille - simplification non limitative) :

$$\rho'_{RSB} \approx \sqrt{K'} . \ \rho_{RSB}$$

Les figures 5, 6, 7, puis les figures 8 et 9 illustrent le procédé de mise en œuvre des deux variantes qui viennent d'être détaillées dans le cas d'un « a priori » qui concerne un protocole d'accès GSM/TDMA à trame et plan de fréquence connus. Ces exemples sont purement illustratifs et non limitatifs.

Notons qu'une des approches originales de l'invention et sa force réside dans le positionnement systématique du calcul du filtre adapté ou du radiomètre sur la grille temps-fréquence indexée sur les caractéristiques de l'émission ce qui présente les nombreux avantages suivants :

- limiter le domaine temporel et fréquentiel de recherche des signaux (à un instant fixé, une détection/synchronisation sur l'une des périodes de la grille renforce la détermination de la vraisemblance ou de la non vraisemblance de

**EP 2 661 637 B1**

l'association au même émetteur de tout signal présent sur d'autres périodes de cette grille)

- discriminer et identifier comme différentes ou provenant d'émetteurs différents les émissions qui ne présentent pas les mêmes caractéristiques de concordance avec la grille temps fréquence,
- cibler sur les émetteurs discriminés le mécanisme de post-intégration d'après la grille variante 1 sur les slots temps fréquence concordant à la grille temps fréquence et à une position de synchronisation grille fixée, ainsi que le montrent les figures 7, 8 et 9, ce qui rend à la fois plus performante et moins complexe la post intégration dans cette variante,
- cibler sur les émetteurs discriminés le mécanisme de post-intégration d'après la grille variante 2 sur les slots temps fréquence concordant à la grille temps fréquence et à une position de synchronisation grille fixée, ce qui fixe les instants et fréquences où la présence du signal est la plus plausible, ainsi que le montrent les figures 7, 8 et 9, et ce qui rend à la fois plus performante et moins complexe la détection et la post intégration dans cette variante.

Variante V générique en contexte aveugle ou coopératif exploitant les contenus estimés dans les messages avant démodulation :

Il s'agit ici d'une variante de l'invention qui exploite de manière très poussée la connaissance a priori de contenus stationnaires, partiellement stationnaire ou quasi-stationnaires véhiculées dans les messages transmis, lorsque cette stationnarité se traduit directement sur le signal modulé. Ces données sont le plus souvent liées à la nature du service de communication (signalisation diffusée pour l'accès ou la synchronisation des terminaux sur les infrastructures ou les relais des réseaux de communications (GSM, PMR, etc.), messages relatifs à des services de diffusion (radio TV numérique), messages relatifs à des services de gestion de flotte et/ou de surveillance et/ou d'anticollision (ADS-B, TIS-B, AIS, etc.), messages relatifs à l'identité des émetteurs lorsque cette identité est transmise : des exemples non limitatifs sont les paramètres CI, LAC, MMN MCC (Cell Identity, Localisation Area, Mobile Network Code, Mobile Country Code) et CA / BA (Cell Allocation, Border Allocation) transmis dans la signalisation GSM, l'adresse ICAO transmise dans les squitters ADSB ainsi que le message d'identification avion, etc.).

Cette variante travaille sur les signaux avant démodulation. Elle peut par ailleurs avantageusement s'appuyer sur les variantes précédentes (utilisation d'un critère de synchronisation coopératif, de grilles etc.), voire n'être mise en oeuvre dans une seconde passe de traitement qu'après l'une ou l'autre des variantes précédentes.

En effet dans de nombreux réseaux et services de communication, les émetteurs respectent des schémas particuliers de répétition et de redondance des données transmises, schémas qui conduisent à des signaux modulés stationnaires, partiellement stationnaires (i.e. stationnaires sur certaines portions), ou quasi-stationnaires (c'est à dire stationnaires au cours du temps moyennant la gestion d'un nombre très limité d'hypothèses). Comme il a été explicité précédemment, c'est en particulier le cas des données liées à la nature de l'émetteur (ex : ADS-B « ICAO adress » comme sur la figure 3), à sa position lorsqu'elle est codée dans les messages (ex : ADS-B « ME field position » comme sur la figure 3), et à l'identification des émetteurs (cf. ADS-B « ME Aircraft identification »), dans certains des messages émis par des stations de base radio-cellulaires GSM et autres véhiculant la signalisation (exemple en GSM : message « cell identity »).

Ces schémas particuliers (positions, répétition et structure de codage dans les slots/trames/multi-trames, etc.) sont le plus souvent connus par consultation des normes et documents de spécification, normes et documents ce qui permettent de reconstruire les signaux de référence stationnaires, partiellement stationnaires ou quasi-stationnaires correspondant, une fois connus les contenus véhiculés par ces séquences.

Sans même connaître ou décoder les contenus II est alors possible d'appliquer dans le cadre de l'invention une intégration cohérente long terme selon trois sous variantes explicitées ci-dessous :

Variante V.1 : Dans cette variante, on associe les différents signaux à un même émetteur sans ambiguïté grâce à la détection du contenu de messages correspondant à un caractère discriminant de l'émetteur, par exemple son identité. La figure 13 en montre l'application dans le cas de signaux ADS-B émis par les avions de ligne : dans cet exemple non exhaustif, les champs des messages exploités sont ceux véhiculant l'identité ICAO de l'avion, tels que décrits sur la figure 4a.

Dans cet exemple, le fait de connaître a priori la position et la répétition du champ ICAO adresse dans les squitters ADS-B permet d'isoler dans chacun des messages la séquence de signal correspondante, sans même la démoduler ni la décoder, et de s'en servir comme signal de référence pour rechercher les autres squitters contenant le même champ ICAO, provenant du même émetteur.

Notons que cet exemple n'est nullement limitatif. Pour l'application du processus, on aurait pu tout aussi bien utiliser le squitter d'identification encore plus discriminant que l'adresse ICAO (comme sur la figure 14) ou des séquences de signaux ADS-B correspondant à des contenus très lentement variables tels que les premiers chiffres de latitude et de la longitude (la figure 13 une application avec le champ longitude), la vitesse, le cap, etc., Pour d'autres réseaux de radio-messagerie, de radiocommunication et de radio diffusion, tels que le TIS-B, l'AIS, les infrastructures radiocellulaires (GSM, UMTS, CDMA 2000, etc.) et de boucle locale (WiFi, Wimax, etc.), les infrastructures de radiodiffusion et de

13

télédiffusion (DAB, DVB, etc.), etc., il est possible d'utiliser de même tous types de signaux de référence stationnaires, partiellement stationnaires ou quasi-stationnaires véhiculés de manière récurrente dans des voies de signalisation. Les signaux correspondant aux identités et aux plans de fréquences des émetteurs sont de bons exemples, dès lors que les contenus correspondants ne sont pas multiplexés avec des données variables au cours du temps. Un tel exemple d'exploitation des champs d'identification des émetteurs, relatif au cas non limitatif et non exhaustif de l'ADS-B, est montré sur la figure 14.

Variante V.2 : Dans cette variante, on procure des associations sur le long terme entre les différents messages provenant d'un même émetteur pour retrouver les données inscrites dans les différents messages au contenu identique reçus sans nouvelle démodulation ni nouveau décodage, dès lors que le contenu du message est soit connu, soit supposé, soit décodé au moins une fois.

Cette variante améliore la précédente dans la mesure où la connaissance a priori du champ exploité, ou bien le décodage réussi au moins une fois du message contenant le champ exploité, permet de reconstituer un signal de référence de meilleure qualité qu'un simple prélèvement sur le signal originel comme dans la variante V.1.

La figure 13 en montre l'application dans le cas de signaux ADS-B émis par les avions de ligne : dans cet exemple non exhaustif, les champs des messages exploités sont ceux véhiculant l'identité ICAO de l'avion, tels que décrits sur les figures 3 et 4a. Dans cet exemple, le fait de décoder une fois le champ ICAO permet de construire un signal de référence étendu (32 bits) et très discriminant, pour détecter sur le long terme l'ensemble des squitters émis par cet avion particulier, et pour produire à nouveau indirectement sans décodage les contenus stationnaires ou très lentement variables des messages correspondants (les contenus stationnaires sont les mêmes que ceux du message déjà décodé).

Comme précédemment, on aurait pu utiliser pour l'application du processus des séquences de signaux correspondant à des contenus de messages ADS-B lentement variables tels que les premiers chiffres de latitude et de la longitude (nombre de degrés), la vitesse, le cap, etc.

Pour de nombreuses autres émissions, telles que les infrastructures radiocellulaires (GSM, UMTS, CDMA 2000, etc.) et de boucle locale (WiFi, Wimax, etc.), les infrastructures de radiodiffusion et de télédiffusion (DAB, DVB, etc.), etc., on peut de même utiliser tous types de contenus stationnaires véhiculés dans les voies de signalisation, par exemple les identités et les plans de fréquences des émetteurs et des porteurs, dès lors qu'ils ne sont pas multiplexés avec des données variables au cours du temps. Un tel exemple d'exploitation des champs d'identification des émetteurs, relatif au cas non limitatif et exhaustif de l'ADS-B, est montré sur la figure 14.

Variante V.3 : Dans cette variante, on synchronise puis on somme de manière cohérente les différents signaux stationnaires de contenu identiques, et on procure de ce fait un gain de sommation cohérent et de diversité « long terme » par rapport au bruit thermique et par rapport aux interférences décorrélées sur le signal ainsi sommé ; ceci permet de renforcer notablement les performances de la démodulation et du décodage de ce signal.

Cette variante ultime cherche à améliorer la production des contenus non connus a priori, mais dont le codage/multiplexage, le tramage et les répétitions sont connus et induisent des signaux utiles aux caractéristiques stationnaires.

La figure 15 en montre l'application dans le cas non exhaustif et non limitatif de signaux ADS-B émis par les avions de ligne (elle s'applique de même à d'autres systèmes de radio messagerie, aux infrastructures radiocellulaires GSM, etc. de radiodiffusion (DVB-T etc.) : Dans cet exemple illustratif et non limitatif, les champs des messages exploités sont ceux véhiculant l'identité de l'émetteur ADS-B (adresse ICAO, et surtout champ d'identification) ou cellule (Cell Identity).

La sommation cohérente de K' messages d'amplitude constante soumis à un bruit + brouillage d'amplitude contante, indépendant et décorrellé, permet d'obtenir un gain cohérent « long terme » de l'ordre de K' en réception sur chacun des bits du message à démoduler et à décoder, selon la formulation vue bien connue de l'homme de l'art $\rho'_{RSB}=$ K'.$\rho_{RSB}$. L'effet du procédé sur le taux de réussite du décodage est donc très rapide et puissant (la figure 15 illustre le cas K'=2).

Comme précédemment, on aurait pu utiliser de même pour l'application du processus

- des séquences de signaux correspondant à d'autres contenus stationnaires des messages ADS-B tels que la catégorie d'émetteur ADS-B, l'adresse ICAO, l'identité, voire même à des contenus lentement variables tels que les premiers chiffres de latitude et de la longitude (nombre de degrés), la vitesse, etc. de manière à améliorer leur démodulation et leur décodage en environnement complexe.
- tous types de contenus stationnaires véhiculé dans d'autres émissions radio-messagerie telles que TIS-B, AIS, les infrastructures radiocellulaires (GSM, UMTS, CDMA 2000, etc.) et de boucle locale (WiFi, Wimax, etc.), les infrastructures de radiodiffusion et de télédiffusion (DAB, DVB, etc.), etc., toujours dans le but d'améliorer leur démodulation et leur décodage en environnement complexe.

La capacité d'association produite par la mise en œuvre de l'invention permet dans cette variante V

- un démodulation avantageuse par sommation cohérente et diversité temporelle long terme appliquées aux données d'identification, de position etc. optimisant la vraisemblance des symboles démodulés dans les messages qui les véhiculent
- mais aussi une poursuite et une fusion d'information de localisation très efficaces sur la base des données symboliques issues d'une démodulation optimisée des messages qui les véhiculent.

Variante VI générique en contexte aveugle ou coopératif exploitant les contenus estimés dans les messages après démodulation ou après décodage :

Il s'agit ici d'une variante de l'invention qui exploite de manière plus poussée les données à caractère stationnaire, partiellement stationnaire, ou quasi-stationnaires véhiculées dans les messages transmis, mais lorsqu'elles sont multiplexées avec des données variables dans le temps au sein des messages transmis. Il n'est alors plus possible d'appliquer directement la variante précédente, car la cohérence des signaux véhiculant les différents messages contenant les données stationnaires n'est plus respectée du fait de leur codage/multiplexage avec des données variables dans le temps (on s'intéresse à certaines des données utiles qui sont stationnaires, mais qui sont portées par un signal qui ne l'est pas en raison du schéma de codage/multiplexage). Selon les schémas de codage et de multiplexage, cette variante travaille donc soit sur les symboles en sortie de démodulation, soit sur les bits en sortie de décodage, et non plus sur le signal brut avant démodulation.

Comme précédemment, les données utilisées sont le plus souvent liées à la nature du service de communication : signalisation diffusée ou dédiée pour l'accès ou la synchronisation des terminaux sur les infrastructures ou relais des réseaux de communications (GSM, PMR), messages relatifs à des services de diffusion (radio TV), de gestion de flotte et/ou de surveillance (ADS-B), etc. Un exemple, typique mais non limitatif, emprunté au GSM, est le champ de code couleur (BSIC, stationnaire), multiplexé et codé avec le compteur de trame FN dans les voies balises GSM (non stationnaire car incrémenté à chaque nouvelle trame).

Cette variante peut par ailleurs s'appuyer avantageusement sur l'une ou l'autre des variantes précédentes, pour mettre préalablement en exergue les trames multitrames séquences de références et positions des messages d'intérêt. Cette variante de l'invention permet ensuite d'exploiter les redondances des champs codés dans les signaux, redondances le plus souvent connues par consultation des normes et documents de spécification, sous la forme de procédure de décodage a postériori par décisions douces sur les données redondantes à long terme.

Un premier exemple de mise en œuvre de cette variante de l'invention est donné pour le cas non limitatif de signaux émis par des stations de base radio-cellulaires présentant des messages répétés, au contenu non intégralement prédictibles, mais contenant des données stationnaires ou lentement variables multiplexées avec des données variables (exemple des réseaux GSM : messages « information system type 3 » véhiculant le code couleur BSIC fixé pour une station de base, multiplexé et codé avec le Frame Number FN lui-même incrémenté de 1 à chaque trame).

Ces messages sont localisés après synchronisation trame et multi-trame des voies de signalisation au moyen d'une ou plusieurs des variantes précédentes I et/ou II et/ou IV de l'invention. Puis ces messages sont démodulés et décodés individuellement. Dans le cadre de la variante VI de l'invention, un post-décodage (nouveau décodage a postériori) à décision douce est ensuite appliqué sur les bits initialement décodés, post-décodage qui exploite tout ou partie de l'a priori disponible. Cet a priori est explicité ci-dessous dans le cas particulier non limitatif des messages GSM « system information type 3 » contenant les champs BSIC et FN répétés environ 20 fois par seconde dans la signalisation transmise :

o la partie BSIC multiplexée dans le message est stationnaire au cours du temps,
o la partie FN multiplexée dans le message est incrémentée à chaque nouvelle trame, dont la synchronisation est par ailleurs connue, l'intervalle entre les FN, i .e. le nombre d'incréments, est donc connu), et par ailleurs le FN codé dans chaque message pris en compte peut aussi être connu grâce à la synchronisation multi-trame si cette donnée a déjà été décodée au moins une fois.

L'un des avantages de la variante VI réside notamment dans le fait que la capacité d'association produite permet un décodage a postériori par décision douce et sur le long terme (vote majoritaire, turbo décision, etc.) des données stationnaires véhiculées dans les messages, qui est bien plus performante que des décisions dures qui seraient prises sur des tentatives de décodage unitaire de chaque message : la vraisemblance des bits décodés est en effet validée sur le long terme. Ainsi,

- Dans le cas d'une procédure de décision simplifiée par vote majoritaire L parmi K', la probabilité d'erreur globale du post-décodage $Pe_{K',L}$ s'exprime en fonction de la probabilité de mauvais décodage initial Pe, supposée égale et indépendante d'un symbole à l'autre ainsi que d'un message à l'autre, par les formules connues de l'homme de l'art suivantes :

Probabilité de mauvais post-décodage (vote majoritaire à L décisions indépendantes de probabilités égales parmi $K'$) : $Pe_{K',L} = \sum_{L \leq I \leq K'} C_{K'}^I \cdot Pe^I \cdot (1-Pe)^{K'-I}$

- Dans le cas d'une procédure de décision plus élaborée (exemples non exhaustifs : réinjection des sorties du post-décodage dans les décodeurs de messages existants, utilisation des bits stationnaires après poste décodage pour améliorer la détection ou la correction des erreurs des CRC sur les bits variables, exploitation du déterminisme sur l'évolution des paramètres non stationnaires, décodage bit à bit et non plus en bloc sur les messages, turbo décision sur les symboles ou sur les messages avec effet de rétroaction sur une succession de messages traités en bloc, etc.), l'expression de la probabilité d'erreur globale du post-décodage $Pe_{K',L}$ devient alors très dépendante du mécanisme de post-décision précisément mis en œuvre, mais le post-décodage peut être encore largement amélioré par rapport au cas du vote majoritaire explicite ci-dessus.

D'autres exemples de mise en œuvre de cette variante de l'invention (toujours non exhaustifs et non limitatifs), correspondent aux messages ADS-B émis par les avions lors des phases d'approche, aux contenus non intégralement prédictibles, mais lentement variables compte tenu de leur vitesse limitée et du taux (connu) de répétition des données. Ces messages sont localisés et associés à un même avion (ADS-B) après synchronisation préambule (ou trame et multi-trame dans certains autres cas d'application de l'invention) au moyen de la variante I et/ou II et/ou IV et/ou V de l'invention. Puis ces messages sont démodulés et subissent dans le cadre de la variante VI de l'invention un décodage à décision douce optimisant la vraisemblance du résultat (vote majoritaire, turbo décision, etc.) en exploitant tout ou partie de l'a priori disponible, c'est à dire dans ce cas précis ( quoique non limitatif et non exhaustif) les chiffres correspondant aux informations de vitesse, de degré ou minutes de latitude et longitude qui n'ont pas pu varier entre plusieurs messages, et qui peuvent de ce fait :

- Soit être corrigés a postériori si certains d'entre eux sont décodés faux dans certains des messages
- Soit servir de support à la détection des erreurs ou à la correction sur les bits de données variables au cours du temps (c'est à dire dans cet exemple précis, quoique non limitatif et non exhaustif, les chiffres des secondes voire des minutes dans les latitudes et longitudes codées).
- Soit servir de support au traitement de données sur de gros volumes (pré-sélection, recherche, etc.)

La capacité d'association produite par la mise en œuvre de l'invention permet dans cette variante VI

- un décodage avantageux par décision douce et sur le long terme des données de position optimisant la vraisemblance du résultat (vote majoritaire, turbo décision, etc.),
- mais aussi une poursuite et une fusion d'information de localisation très efficace sur la base des données symboliques issues d'un décodage optimisé des messages qui les véhiculent.

Le procédé selon l'invention offre aussi les avantages listés ci-après.

La simplicité dans la mise en œuvre du procédé d'association, l'absence quasi-totale d'ambigüité dans les associations, grâce, notamment au caractère symbolique des redondances dans le signal exploitées, la possibilité de conduire des intégrations cohérentes et/ou incohérentes longues et efficaces dans les traitements en aval, l'amélioration de tous les procédés aval d'estimation, de localisation, de fusion, d'extraction de suivi, de démodulation/décodage, etc.

Le procédé selon l'invention dans ce mode de réalisation offre notamment une capacité de détection/association en amont très efficace et de nature à améliorer drastiquement les traitements de détection et synchronisation, mais aussi tous les traitements avals, tels que le dénombrement de sources, la localisation d'émetteurs, la démodulation et le décodage des messages, etc., capacité produite par l'extraction de contenus particuliers prédéterminés ou présupposés, mais aussi par l'exploitation de la redondance de contenus identiques, même non précisément déterminés. Cette capacité de détection/association est bien plus sensible, robuste et performante que la démodulation ou le décodage des signaux prévus par les normes ou documents techniques eux-mêmes car elle bénéficie d'un gain de traitement croissant avec la durée et avec la répétition des contenus utilisés

De ce fait, la capacité d'association procurée par le procédé permet ensuite :

- de procurer un gain de sommation cohérente « court terme » par rapport au bruit thermique et par rapport aux interférences décorrélées pour la détection de chacun des messages dont le contenu est connu ou supposé ; ce gain s'exprime approximativement par $\rho'_{RSB} = K \cdot \rho_{RSB}$ ; K étant ici le nombre de symboles indépendants dans le message ; $\rho_{RSB}$ étant le rapport signal à bruit en entrée et $\rho'_{RSB}$ étant le rapport signal à bruit en sortie de sommation cohérente « court terme »
- de synchroniser puis de sommer de manière cohérente les différentes portions de messages correspondant à un contenu identique émis par un même émetteur, et de procurer de ce fait un gain de sommation cohérent « long terme » par rapport au bruit thermique et un gain de diversité par rapport aux interférences décorrélées sur les messages dont le contenu est détecté ; ce gain s'exprime approximativement par $\rho'_{RSB} = K'.\rho_{RSB}$ sur chacun des symboles du messages ; K' étant ici le nombre de fois que la sommation cohérente des signaux est effectuée (ou nombre d'itérations dans le processus d'intégration cohérente long terme), $\rho_{RSB}$ étant le rapport signal à bruit en entrée et $\rho'_{RSB}$ étant le rapport signal à bruit en sortie de sommation cohérente « long terme »

- de synchroniser et de sommer de manière incohérente les différents critères de détection et synchronisation sur les messages correspondant à un contenu, soit identiquement répété (exemples non exhaustifs : un numéro d'identification d'émetteur, une position géographique fixe), soit connu ou prédictible a priori (exemples non exhaustifs : un compteur incrémenté régulièrement chaque nouvelle période de trame, un position géographique évoluant lentement), émis par un même émetteur, et de procurer un gain d'intégration incohérente par rapport au bruit thermique et par rapport aux interférences décorrélées sur les messages dont le contenu est détecté ; de gain s'exprime approximativement par $\rho''_{RSB} = \sqrt{K'}.\rho'_{RSB}$ ; K' étant le nombre d'itérations dans le processus d'intégration incohérente, $\rho_{RSB}$ étant le rapport signal à bruit en entrée et $\rho'_{RSB}$ étant le rapport signal à bruit en sortie d'intégration incohérente « long terme »
- de procurer un gain de diversité en temps, en Doppler, voire même en espace et en polarisation propice à la réjection d'interférence sur les messages à démoduler/décoder ;
- de procurer les associations sur le long terme entre les différents messages provenant d'un même émetteur permettant de retrouver les données inscrites dans les différents messages au contenu identique reçus sans nouvelle démodulation ni nouveau décodage, dès lors que le contenu du message a été produit au moins une fois,
- de renforcer les procédés de dénombrement, identification, décodage, localisation, suivi, basé sur l'exploitation du contenu détecté ou décodé des messages.

## Revendications

1. - Procédé d'association de signaux de radiocommunications cellulaires GSM dans un système comprenant un ou plusieurs récepteurs (1) et un processeur (2), lesdits signaux ayant une structure au moins partiellement stationnaire, des contenus au moins partiellement stationnaires et des contenus non stationnaires, le mot structure désignant l'organisation des signaux dans le domaine temps - fréquence, comportant au moins les étapes suivantes ;

   • acquérir des signaux sur au moins un capteur,
   • utiliser une base de données (4) décrivant les structures et contenus au moins partiellement stationnaires des signaux devant être traités, afin d'extraire et d'associer une pluralité de signaux distincts émis par un même émetteur Ei en exploitant la structure et le contenu au moins partiellement stationnaires de chaque signal émis par Ei, cette étape comprenant l'utilisation en tant que signal de référence des séquences middamble présentes aux milieux des slots GSM, en un ou plusieurs passages successifs, pour la détection et la synchronisation par filtrage adapté des signaux, et comprenant en outre :

      - dans le sens descendant, valider la concordance des détections et synchronisations obtenues avec le tramage et le multitramage 26 et le multitramage 51 définis par le standard GSM et rechercher les positions correspondantes de la grille GSM,
      - dans le sens montant, valider la concordance des synchronisations obtenues avec les synchronisations trame et multitrames correspondant aux émissions des différentes stations BTS environnantes enregistrées dans le sens descendant,

   • combiner les parties ou contenus au moins partiellement stationnaires des signaux distincts émis par Ei afin d'améliorer leur qualité, en :

      - appliquant des sommations cohérentes long terme à la démodulation des messages et des champs stationnaires : les repérer dans la grille d'après les positions de synchronisation dans la trame de la fréquence balise et dans chaque slot, et en sommant de manière cohérente les signaux correspondants avant de les démoduler et de les décoder, et/ou en
      - appliquant des procédures de post-intégration long terme aux décodages des messages variables dans le temps qui véhiculent certains contenus stationnaires, tels que le champ BSIC, code couleur cellule, multiplexé et codé avec le champ FN, compteur de trame, en les repérant dans la grille temps-fréquence d'après les positions de synchronisation dans la multitrame, dans la trame et dans le slot, en les décodant individuellement, puis en établissant un post-décodage des signaux distincts décodés par une technique de décision douce, vote majoritaire, turbo décision ou par tout procédé d'accumulation améliorant la vraisemblance finale du résultat du décodage.

**2.** - Procédé suivant la revendication précédente, dans lequel l'étape de combinaison des parties ou contenus au moins partiellement stationnaires de signaux émis par Ei est réalisée à des fins de synchronisation temps et Doppler.

**3.** - Procédé suivant la revendication 1, **caractérisé en ce que** l'étape d'extraction des signaux et l'étape de combinaison des parties ou contenus au moins partiellement stationnaires des signaux émis par Ei prennent en compte des contenus présents à des fins de reconnaissance des émetteurs, d'identification des porteurs des émetteurs, de planification et d'ingénierie des réseaux de communication ou de description des formats de trames messages et schémas de modulation/codage.

**4.** - Procédé suivant la revendication 1, **caractérisé en ce que** l'étape d'extraction des signaux et l'étape de combinaison des parties ou contenus au moins partiellement stationnaires des signaux émis par Ei utilisent les caractéristiques de multiplexage et et de codage simplifiés des signaux, afin d'augmenter les durées d'intégration et les performances discriminantes dans l'association en exploitant conjointement des contenus codés dans différents messages ou dans différentes portions d'un même message.

**5.** - Procédé selon la revendication 1, **caractérisé en ce que** l'étape d'extraction d'une pluralité de signaux distincts émis par un même émetteur Ei comporte au moins l'utilisation d'une grille glissante dans le domaine temps fréquence pour la discrimination et l'exploitation des caractéristiques au moins partiellement stationnaires de structure et de contenu des signaux dans le domaine temps fréquence.

**6.** -Procédé selon la revendication 1 **caractérisé en ce que** l'on utilise en tant que signal de référence pour une discrimination des différents émetteurs présents dans la trame GSM DL, pour la re-détection et pour l'association des signaux aux BTS GSM, les champs LAC, MMC,MNC, CI, CA list et BA list dont les récurrences dans les multitrames sont connues avec une faible combinatoire d'après les synchronisations, soit en prélevant le signal correspondant, soit en reconstituant le signal correspondant si son contenu est connu a priori ou s'il a été décodé au moins une fois, soit en sommant de manière cohérente les signaux correspondant à plusieurs positions de synchronisation.

**7.** -Procédé selon l'une des revendications précédentes **caractérisé en ce qu'**il comporte au moins les étapes suivantes :

> - Association des messages contenant les mêmes contenus,
> - Démodulation et décodage individuels des messages, mémorisation des résultats de démodulation et décodage et mémorisation des estimations de qualité associées telles que le niveau de réception, le rapport énergie symbole utile / énergie bruit, distance à la constellation, distance à l'espace des mots de code,
> - Post-décodagea postériori, à décision douce, vote majoritaire, turbo décision, améliorant sur le long terme la vraisemblance des bits finalement décidés par rapport aux bits initialement démodulés/décodés, en exploitant les messages individuellement décodés qui contiennent ces bits, les estimations de qualité associées et en l'a priori disponible :

> > - Stationnarité de tout ou partie du message ou de certains bits des champs contenus dans le message
> > - Connaissance a priori de l'évolution du contenu ou de certains champs contenus dans le message en raison de la nature des paramètres codés et de la place desdits messages dans la trame ou la supertrame,
> > - Connaissance a priori d'une partie du contenu du message ou de certains bits contenus dans les champs des messages suite aux procédures de démodulation décodage Des messages.

**8.** - Procédé selon la revendication 7 appliqué aux signaux de signalisation radiocellulaire GSM **caractérisé en ce qu'**il comporte une étape où on l'utilise pour l'amélioration du décodage des messages de type 3, la stationnarité de certains des champs contenus tels que le code de couleur BSIC et la connaissance a priori de la variation des paramètres non stationnaires, tels que le compteur de trame FN, d'après la synchronisation relative des messages.


**Patentansprüche**

**1.** Verfahren zum Assoziieren von GSM-Zellularfunksignalen in einem System, das einen oder mehrere Empfänger (1) und einen Prozessor (2) umfasst, wobei die Signale eine zumindest teilweise stationäre Struktur, zumindest teilweise stationäre Inhalte und nicht-stationäre Inhalte haben, wobei das Wort Struktur die Organisation der Signale in der Zeit-Frequenz-Domäne bezeichnet, das mindestens die folgenden Schritte beinhaltet:

• Erfassen von Signalen an mindestens einem Sensor,

• Nutzen einer Datenbank (4), die die zumindest teilweise stationären Strukturen und Inhalte der zu verarbeitenden Signale beschreibt, um mehrere von einem selben Sender Ei ausgesendete verschiedene Signale zu extrahieren und zu assoziieren, unter Nutzung der/des zumindest teilweise stationären Struktur und Inhalts jedes von Ei ausgesendeten Signals, wobei dieser Schritt die Verwendung der in der Mitte der GSM-Slots in einem oder mehreren aufeinanderfolgenden Durchgängen vorliegenden Middamble-Sequenzen als Referenzsignal für die Erkennung und Synchronisierung durch adaptive Filterung der Signale beinhaltet, und ferner Folgendes beinhaltet:

  - in abfallender Richtung, Validieren der Übereinstimmung der erhaltenen Erkennungen und Synchronisierungen mit dem Frame und dem Multiframe 26 und dem Multiframe 51, definiert durch den GSM-Standard, und Suchen der entsprechenden Positionen des GSM-Rasters,
  - in ansteigender Richtung, Validieren der Übereinstimmung der erhaltenen Synchronisierungen mit den Frame- und Multiframe-Synchronisierungen entsprechend den Emissionen der verschiedenen umliegenden BTS-Stationen, die in der abfallenden Richtung aufgezeichnet wurden,

• Kombinieren der zumindest teilweise stationären Teile oder Inhalte der von Ei ausgesendeten verschiedenen Signale, um ihre Qualität zu verbessern durch:

  - Anwenden langfristiger kohärenter Summierungen auf die Demodulation der stationären Nachrichten und Felder: Auffinden derselben im Raster anhand der Synchronisationspositionen im Frame der Beacon-Frequenz und in jedem Slot, und durch kohärentes Summieren der entsprechenden Signale vor ihrer Demodulation und Decodierung, und/oder durch
  - Anwenden langfristiger Nachintegrationsprozeduren auf die Decodierungen von zeitvariablen Nachrichten, die bestimmte stationäre Inhalte wie das BSIC-Feld, den Farbcode der Zelle, multiplexiert und codiert mit dem FN-Feld, der Frame-Zahl, transportieren, durch Auffinden derselben im Zeit-Frequenz-Raster anhand der Synchronisationspositionen im Multiframe, im Frame und im Slot, durch individuelles Decodieren derselben, dann Einrichten einer Nachcodierung der verschiedenen Signale, decodiert mit einer Technik von Soft Decision, Mehrheitsabstimmung, Turboentscheidung oder durch eine beliebige Akkumulationsprozedur, die die endgültige Wahrscheinlichkeit des Decodierungsergebnisses verbessert.

2. Verfahren nach dem vorhergehenden Anspruch, wobei der Schritt des Kombinierens der zumindest teilweise stationären Teile oder Inhalte von von Ei ausgesendeten Signalen für die Zwecke von Zeit- und Dopplersynchronisation erfolgt.

3. Verfahren nach Anspruch 1, **dadurch gekennzeichnet, dass** der Schritt des Extrahierens der Signale und der Schritt des Kombinierens der zumindest teilweise stationären Teile oder Inhalte der von Ei ausgesendeten Signale vorhandene Inhalte für die Zwecke von Sendererkennung, Identifizierung der Träger der Sender, Planung und Konstruktion von Kommunikationsnetzen oder Beschreibung von Nachrichten-Frame-Formaten und Modulations-/Codierungsschemata berücksichtigt.

4. Verfahren nach Anspruch 1, **dadurch gekennzeichnet, dass** der Schritt des Extrahierens von Signalen und der Schritt des Kombinierens von zumindest teilweise stationären Teilen oder Inhalten der von Ei ausgesendeten Signale die vereinfachten Multiplex- und Codierungscharakteristiken der Signale benutzen, um die Integrationsdauern und die Diskriminierungsleistungen in der Assoziation zu erhöhen, unter gemeinsamer Nutzung der codierten Inhalte in verschiedenen Nachrichten oder in verschiedenen Teilen einer gleichen Nachricht.

5. Verfahren nach Anspruch 1, **dadurch gekennzeichnet, dass** der Schritt des Extrahierens mehrerer von einem selben Sender Ei ausgesendeter verschiedener Signale mindestens die Verwendung eines gleitenden Rasters in der Zeit-Frequenz-Domäne zur Diskriminierung und Nutzung von mindestens teilweise stationären Charakteristiken der Struktur und des Inhalts der Signale in der Zeit-Frequenz-Domäne beinhaltet.

6. Verfahren nach Anspruch 1, **dadurch gekennzeichnet, dass** als Referenzsignal für eine Diskriminierung der verschiedenen im GSM DL-Frame vorhandenen Sender, für die Wiedererkennung und für die Assoziierung der Signale mit den GSM BTS, die Felder LAC, MMC, MNC, CI, CA list und BA list benutzt werden, deren Vorkommen in den Multiframes mit geringer Kombinatorik aus den Synchronisationen bekannt ist, entweder durch Abnahme des entsprechenden Signals, durch Rekonstruktion des entsprechenden Signals, wenn sein Inhalt a priori bekannt ist oder wenn es mindestens einmal decodiert wurde, oder durch kohärente Summierung der Signale entsprechend mehreren Synchronisationspositionen.

7. Verfahren nach einem der vorhergehenden Ansprüche, **dadurch gekennzeichnet, dass** er mindestens die folgenden Schritte beinhaltet:

- Assoziieren der Nachrichten, die dieselben Inhalte enthalten,
- individuelles Demodulieren und Decodieren der Nachrichten, Speichern der Demodulations- und Decodierungsergebnisse und Speichern assoziierter Qualitätsschätzungen wie Empfangspegel, Nutzsymbolenergie/Rauschenergie-Verhältnis, Abstand zur Konstellation, Abstand zum Codewortraum,
- A-posteriori-Nachdecodieren, mit Soft Decision, Mehrheitsabstimmung, Turboentscheidung, was zu einer langfristigen Verbesserung der Wahrscheinlichkeit der Bits, über die schließlich entschieden wird, im Verhältnis zu den ursprünglich demodulierten/decodierten Bits führt, unter Verwendung der individuell decodierten Nachrichten, die diese Bits enthalten, der assoziierten Qualitätsschätzungen und unter A-priori- Verfügbarkeit:
- Stationarität der Nachricht ganz oder teilweise oder bestimmter Bits der in der Nachricht enthaltenen Felder;
- A-priori-Kenntnis der Entwicklung des Inhalts oder bestimmter in der Nachricht enthaltener Felder aufgrund der Art der codierten Parameter und des Orts der Nachrichten im Frame oder Superframe,
- A-priori-Kenntnis eines Teils des Inhalts der Nachricht oder bestimmter Bits, die in den Feldern der Nachrichten enthalten sind, als Ergebnis der Demodulations-und Decodierungsprozeduren der Nachrichten.

8. Verfahren nach Anspruch 7, das auf GSM-Zellularfunksignale angewendet wird, **dadurch gekennzeichnet, dass** es einen Schritt beinhaltet, in dem es zum Verbessern der Decodierung von Typ-3-Nachrichten, der Stationarität bestimmter der enthaltenen Felder wie des BSIC-Farbcodes und der A-priori-Kenntnis der Veränderung der nichtstationären Parameter wie des Frame-Zählers FN aufgrund der relativen Synchronisation der Nachrichten verwendet wird.

**Claims**

1. A method for associating GSM cellular radio communication signals in a system comprising one or more receiver(s) (1) and a processor (2), said signals having an at least partially stationary structure, at least partially stationary contents and non-stationary contents, with the word structure denoting the organisation of the signals in the time-frequency domain, said method comprising at least the following steps:

• acquiring signals on at least one sensor;
• using a database (4) describing the at least partially stationary structures and contents of the signals to be processed, in order to extract and associate a plurality of separate signals transmitted by the same transmitter Ei by using the at least partially stationary structure and contents of each signal transmitted by the transmitter Ei, with this step comprising using, as a reference signal, the middamble sequences present in the middle of the GSM slots, in one or more successive passage(s), for detecting and synchronising the signals by adaptive filtering, and further comprising:

- in the downwards direction, confirming the concordance of the detections and synchronisations obtained with the framing and multi-framing 26 and the multi-framing 51 defined by the GSM standard and finding the corresponding positions of the GSM grid;
- in the upwards direction, confirming the concordance of the synchronisations obtained with the frame and multi-frame synchronisations corresponding to the transmissions of the various surrounding BTS stations recorded in the downwards direction;

• combining the at least partially stationary parts or contents of the separate signals transmitted by the transmitter Ei in order to improve the quality thereof, by:

- applying long-term coherent summations to the demodulation of the messages and of the stationary fields: identifying them in the grid according to the synchronisation positions in the frame of the beacon frequency and in each slot, and by coherently summing the corresponding signals before demodulating them and decoding them; and/or by
- applying long-term post-integration procedures to any decoding of the time-variable messages that convey certain stationary contents, such as the BSIC field, cell colour code, multiplexed and coded with the FN field, frame counter, by identifying them in the time-frequency grid according to the synchronisation positions in the multi-frame, in the frame and in the slot, by individually decoding them, then by establishing post-decoding of the separate signals decoded by a soft decision-making, majority vote, turbo decision-making technique or by any accumulation method improving the final likelihood of the result of the decoding.

2.  The method as claimed in the preceding claim, wherein the step of combining at least partially stationary parts or contents of signals transmitted by the transmitter Ei is carried out for time synchronisation and Doppler purposes.

3.  The method as claimed in claim 1, **characterised in that** the step of extracting signals and the step of combining at least partially stationary parts or contents of signals transmitted by the transmitter Ei take into account contents present for the purposes of recognising transmitters, of identifying carriers of the transmitters, of planning and engineering communication networks or of describing formats of message frames and modulation/coding schemes.

4.  The method as claimed in claim 1, **characterised in that** the step of extracting signals and the step of combining at least partially stationary parts or contents of the signals transmitted by the transmitter Ei use the simplified multiplexing and coding features of the signals, in order to increase the integration durations and the discriminatory performance capabilities in the association by jointly using coded contents in different messages or in different portions of the same message.

5.  The method as claimed in claim 1, **characterised in that** the step of extracting a plurality of separate signals transmitted by the same transmitter Ei comprises at least the use of a sliding grid in the time-frequency domain for discriminating and using at least partially stationary features of the structure and of the contents of the signals in the time-frequency domain.

6.  The method as claimed in claim 1, **characterised in that** the fields LAC, MMC, MNC, CI, CA list and BA list are used as a reference signal for discriminating the various transmitters present in the GSM DL frame, for re-detecting and for associating signals with the BTS GSM, with said fields having recurrences in the multi-frames that are known with weak combinatorics from the synchronisations, either by sampling the corresponding signal or by reconstructing the corresponding signal if its content is a priori known or if it has been decoded at least once, or by coherently summing the corresponding signals to a plurality of synchronisation positions.

7.  The method as claimed in any of the preceding claims, **characterised in that** it comprises at least the following steps:

    - associating messages containing the same contents;
    - individually demodulating and decoding the messages, storing the results of the demodulation and decoding and storing associated quality estimates such as the reception level, the useful symbol/noise energy ratio, the distance to the constellation, the distance to the space of the code words;
    - a posteriori post-decoding using a soft decision-making, majority vote, turbo decision-making technique, improving, over the long term, the likelihood of the bits finally selected with respect to the initially demodulated/decoded bits, by using the individually decoded messages that contain these bits, the associated quality estimates and the a priori available:
    - stationarity of all or some of the message or of some bits of the fields contained in the message;
    - a priori knowledge of the evolution of the content or of certain fields contained in the message due to the nature of the coded parameters and the location of said messages in the frame or the super-frame;
    - a priori knowledge of part of the content of the message or of certain bits contained in the fields of the messages following the procedures for demodulating and decoding the messages.

8.  The method as claimed in claim 7 applied to the GSM radio cellular signalling signals, **characterised in that** it comprises a step that uses, for improving the decoding of type 3 messages, the stationarity of some of the contained fields, such as the BSIC colour code and the a priori knowledge of the variation of the non-stationary parameters, such as the frame counter FN, from the relative synchronisation of the messages.

Base
Données 4

Signaux
en entrée
du dispositif
mettant
en œuvre
l'invention

Processeur 2

Résultats
en sortie
du dispositif
mettant
en œuvre
l'invention

capteur 1

capteur 1'

mémoire 3

capteur 1''

• • •

• • •

FIG.1

## Modulation et tramage ADS-B (Surveillance Dépendance Automatique – Diffusion)
## et TIS-B (Surveillance Information Trafic – Diffusion)
### d'après DO-260A

Modulation PPM,
Impulsion ≈ 0,5±0,05 µs
BW≈2 MHz ; 1 bit ≈1 µs
Bit 0 : ⌐ Bit 1 : ⌐

Exemple de signal modulé et de séquence binaire associée

**Visualisation d'un signal ADSB de 120 µs numérisé sur fréquence intermédiaire 70 MHz**

**Message 112 bits**

### ADS-B et TIS-B STRUCTURES FORMAT MESSAGE

| 1 (MSB) (LSB) 5 | 6 (MSB) (LSB) 8 | 9 (MSB) (LSB) 32 | 33 (MSB) (LSB) 88 | 89 (MSB) (LSB) 112 |
|---|---|---|---|---|
| DF = 17 [5] | CA [3] | AA ICAO Adresse [24] | ADS-B Message Champ ME [56] | PI [24] |

**Préambule 4 impulsions**

Spectre de la première impulsion visualisé sur fréquence intermédiaire 70 MHz bande 2 MHz

~2 MHz

3 dB

## FIG.2

**Struture des messages ADS-B (Surveillance Dépendance Automatique – Diffusion) et TIS-B (Surveillance Information Trafic – Diffusion) d'après DO-260A**

| ADS-B et TIS-B STRUCTURES FORMAT MESSAGE | | | | | |
|---|---|---|---|---|---|
| Bit #→ | 1 (MSB) (LSB) 5 | 6 (MSB) (LSB) 8 | 9 (MSB) (LSB) 32 | 33 (MSB) (LSB) 88 | 89 (MSB) (LSB) 112 |
| DF = 17 Champ Noms → | DF = 17 [5] | CA [3] | AA ICAO Adresse [24] | Message ADS-B Champ ME [56] | PI [24] |
| DF = 18 Champ Noms → | DF = 18 [5] | CF = 0 [3] | AA ICAO Adresse [24] | Message ADS-B Champ ME [56] | PI [24] |
| | | CF = 1 [3] | AA non-ICAO Adresse [24] | | |
| | | CF = 2 à 3 [3] | AA [24] | Message TIS-B Champ ME [56] | PI [24] |
| | | CF = 4 [3] | Réservé pour TIS-B Gestion Messages | | PI [24] |
| | | CF = 5 à 7 | Réservé | | PI [24] |
| DF = 19 Champ Noms → | DF = 19 [5] | AF = 0 [3] | AA ICAO Adresse [24] | Message ADS-B Champ ME [56] | PI [24] |
| | | AF = 1 à 7 [3] | | | |

dt=2,4 μs  dt=8,0 μs dt=5,0 dt=3,0 μs          dt=24,0 μs          dt=22,0 μs          dt=17,0 μs          dt=17,0 μs          dt=24,0 μs

LAT  LONG

Contenus stationnaires champs DF,CA,AF,CF adresse ICAO

Données utiles ∈ Message Exemple du Message de Position

Code de Redondance Cyclique

| CHAMP DU MESSAGE "ME" | | | | | | | | |
|---|---|---|---|---|---|---|---|---|
| MSG BIT # | 33...37 | 38..........39 | 40 | 41...52 | 53 | 54 | 55......71 | 72......88 |
| "ME" BIT # | 1...5 | 6.............7 | 8 | 9......20 | 21 | 22 | 23.....39 | 40......56 |
| Nom de Champ | Type [0] | Statut de surveillance [2] | Antenne unique [1] | Altitude [12] | Temps (T) [1] | Format CPR (F) [1] | Latitude codée [17] | Longitude codée [17] |
| | MSG LSB | MSG LSB | MSG LSB | MSG LSB | | | MSG LSB | MSG LSB |

Certaines Données
- stationnaires (ME "identification")
- à faible combinatoire (type)
- quasi-stationnaires (ME "position")
surveillance status, ingle antenna, time MSB de Latitude et Longitude

FIG.3

# Analyse d'un squitter ADS-B sur fréquence intermédiaire 70 MHz
## Reconstitution de séquences de référence ADS-B d'après les contenus stationnaires

**Préambule ⇔ signal ASK2 2 Mbds**

dt=551,39 ns  dt=1,00 ns  dt=1,00 ns  dt=1,00 ns  dt=1,00 ns  dt=1,00 ns

Amplitude Signal réel préambule

**Symboles PPM correspondants**

| 1 | 1 | sans | 0 | 0 | sans ... |
|---|---|------|---|---|----------|

**Symboles équivalents ASK2 2 Mbds**

| 10 | 10 | 00 | 01 | 01 | 00 | 00 | 00 ... |
|----|----|----|----|----|----|----|--------|

**Signal de référence préambule (bande de base)**

t=0,00 s  t=1,00 µs  t=2,00 µs  t=3,00 µs  t=4,00 µs  t=5,00 µs  t=6,00 µs  t=7,00 µs  t=8,00 µs

**32 premiers bits msg ⇔ signal ASK2 2 Mbds**

dt=0,00 s                                                dt=31,98 µs

Amplitude Signal réel début message

**Symboles PPM correspondants**

| 1 | 0 0 0 | 1 | 0 0 0 | 1 1  1 1  1 1  1 1  1 1  1 1  1 1  1 1  1 1  1 1 | 0 0 0 | 1 |

**Symboles équivalents ASK2 2 Mbds**

10 010101 10010101 101010101010101010101010101010101010101010 010101 10

**Signal référence 32 1er bits stationnaires msg (bande de base)**

# FIG.4a

EP 2 661 637 B1

**Analyse d'un pulse ADS-B sur fréquence intermédiaire 70 MHz**
**Transposition en bande de base et filtrage passe bas**

FIG.4b

EP 2 661 637 B1

# Organisation de la trame GSM

Hypertrame = 3h 28' 53" 760ms = 2048 Supertrames (compteur T1=0,...,2047)

| 0 | 1 | 2 | ...... | 2047 |

Hypertrame = 27715648 Trames

Supertrame = 6,12 secondes

| 0 | 1 | 2 | ...... | 25 |
| 0 | 1 | 2 | 3 | | 50 |

Supertrame = 1326 Trames
= soit 26 Multitrames 51 (BCCH, CCCH)
soit 51 Multitrames 26 (TCH SDCCH)

| 0 | 1 | 2 | ...... | 50 |

| 0 | 1 | ...... | 25 |

MTrame = soit 51 trames TDMA (M51)
soit 26 trames TDMA (M26)

M51 = 235,38 ms
compteur T3

M 26 = 120 ms

Trame = 8 Tslots = 4,61536 ms
Tslot = 3/5200 sec = 0,57692 ms

Frame Number : FN variant entre 0 et 2715647 = 2047x26x51-1
FN 
T1 (11 bits, n° supertrame) = Ent[F/(26x51)], invariant durant 6,13 s cyclique
T1'= T1 mod (32) invariant durant 6,12 s, cyclique de période 196,16 sec.
T1R= T1 mod (64) invariant durant 6,12 s, cyclique de période 391,6 s = 6'31"68 centièmes
T2 (5 bits, n° Mtrame 51 dans Hyptr) = FN mod (26), cyclique période 120 ms
T3 (6 bits n° Mtrame 26 dans Hyptr) ) = FN mod (51), cyclique période 235,38 ms

## FIG.5

EP 2 661 637 B1

# FIG. 5 (cont.)

**Codage d'un message de signalisation GSM multiplexé dans canal balise**

| *Signalisation FCCH* | *Signalisation SCH* | *Signalisation RACH* | *Signalisation BCCH et CCCH* |
|---|---|---|---|
| Pas de Données | Données numériques | Données numériques | Données numériques |

*SCH:* bloc signalisation SBU = 25 bits

*RACH:* bloc signalisation SBU = 1 octet = 8 bits

*BCCH et CCCH:* bloc signalisation 23 octets soit SBU = 184 bits

| | Codage Canal chiffrement | Codage Canal chiffrement | Codage Canal chiffrement |

*SCH:* 78 bits codés / 0,577 ms

*RACH:* Mot de 14 bit =
8 b + [6 (CRC) $\oplus$ BSIC]
+ 4 bits & cod r=1/2
=> 36 bits codés / 0,577 ms

*BCCH et CCCH:* 456 bits / 20 ms
en 8 SDU de 57 bits

**Multiplexage
5 bursts / MTr.51
TN 0
Trames 0, 10,
20, 30, 40**

**Multiplexage
5 bursts / MTr.51
TN 0
Trames 1, 11,
21, 31, 41**

**Multiplexage / Mtr.51
rafales de 1 burst
TN 0**

**Multiplexage / MTr.51
blocs de 4 bursts
config. à 3 blocs / MTr.51
et 9 blocs / MTr.51
sur TN 0 et TN pair (?)**

## FIG.6

*Mapping des blocs brassés sur les bursts de 4 trames*
*(SDU BCH signalisation = 8 demis bursts =8 x114/2 bits codés)*

*Trame TDMA*
*= 4, 615 ms*

*trame courante*

*Burst 0   Burst 1   Burst 2   Burst 3*

*FN≡0(4)  FN≡1(4) FN≡2(4)  FN≡3(4)*

*Multiplex Trame signalisation '-SDCCH) 10 ms*
*(183  symboles utiles codés chiffrés = 4 x 114/2 )*
*sur 4 trames TDMA : 4x4, 615 ms ≈ 20 ms*

*Redondance  de la TSC (x4) => intégration possible*
*Redondance des bits flag de préemption (x4) => décodage par vote majoritaire*
*=> validation a postériori*

## BURST SYNCHRONISATION SCH (inclus dans voie balise DL)

| bits de queue | | | bits de queue | Délai de garde |
|---|---|---|---|---|
| 3 | 39 | 64 | 39 | 3 | 8,25 |
| | bits utiles | Training séquence | bits utiles | |

## BURST SYNCHRONISATION RACH (UL)

| bits de queue | | bits de queue | | Délai de garde |
|---|---|---|---|---|
| 8 | 41 | 36 | 3 | 68,25 (252 micosec.) |
| | Training séquence | bits utiles | | |

rythme  270.833 kbauds

durée bit  : 3.692 us

SCH séquence d'apprentissage: 64 bits, unique    bits queue : 3+3

| | Séquence | | | Séquence |
|---|---|---|---|---|
| Bn°42 à Bn°105 | 1011100101100010000001000000 1111 0010110101000101011101 1000011011 | | Bn°1 à Bn°3 Bn°146 à Bn°148 | 000 000 |

RACH séquence d'apprentissage: 41 bits, unique    bits queue : 3+3

| | Séquence | | | Séquence |
|---|---|---|---|---|
| Bn°8 à Bn°53 | | | Bn°1 à Bn°3 Bn°146 à Bn°148 | 000 000 |

## FIG. 6 (cont.)

Codage d'un message de signalisation GSM multiplexé dans canal trafic

| **Signalisation SACCH** | **Signalisation SDCCH** | **Signalisation ACCH** |
|---|---|---|
| Données numériques | Données numériques | Données numériques |

bloc signalisation 23 octets soit SBU = 184 bits     bloc signalisation 23 octets soit SBU = 184 bits     bloc signalisation 23 octets soit SBU = 184 bits

| Codage Canal chiffrement | Codage Canal chiffrement | Codage Canal chiffrement |
|---|---|---|

456 bits / 20 ms en 8 SDU de 57 bits     456 bits / 20 ms en 8 SDU de 57 bits     456 bits / 20 ms en 8 SDU de 57 bits

**Multiplexage 1 burst / MTrame26 et par TCH associé sur trame n°12 et TN$_{TCH}$**

**Multiplexage 1 burst / Trame TDMA TN 0 à 7**

**Multiplexage 8 1/2 bursts / MTrame26 sur trames n° 4,5,…,11**

FIG. 6 (cont.)

*Mapping des blocs phonie brassés sur les bursts de 8 trames*
*(SDU TCH phonie = 8 demis bursts =8 x114/2 bits codés)*

*Trame TDMA*
*= 4, 615 ms*

SDU précédent + SDU courant

SDU courant + SDU suivant

Burst 0  Burst 1  Burst 2  Burst 3  Burst 4  Burst 5  Burst 6  Burst 7

FN0   FN0+1 FN0+2   FN0+3 FN0+4 FN0+5 FN0+6 FN0+7
*(4 trames ≈ 20 ms)*
*Durée de transmission d' une trame trafic (phonie./datas) de 20 ms*
*(456 symboles utiles codés chiffrés = 8x 114/2)*
*Multiplexée sur 8 Trames TDMA : 8x4, 615 ms ≈ 40 ms*

*Trame TDMA*
*= 4, 615 ms*

SACCH ou Iddle

SDU précédent + SDU courant

SDU courant + SDU suivant

Burst 0  Burst 1  Burst 2  Burst 3      Burst 4  Burst 5  Burst 6   Burst 7

FN0   FN0+1 FN0+2   FN0+3        FN0+5  FN0+6 FN0+7FN0+8
*(4 trames ≈ 20 ms)*                     *(4 trames ≈ 20 ms)*

*Durée de transmission d' une  trame trafic (phonie./datas)  de 20 ms*
*(456 symboles utiles codés chiffrés = 8x 114/2)*
*Multiplexée sur 8 Trames TDMA : 8x4, 615 ms ≈ 40 ms + intercalage 1 trame SACCH ou IIddle*

## BURST DE TRAFIC (TCH ou TCH + FACCH)

bits de queue

**Drapeaux de préemption** Flag1    Flag2

bits de queue    Délai de garde

| 3 | 57 | 1 | 26 | 1 | 57 | 3 | 8,25 |

**bits utiles**              **Training séquence**              **bits utiles**

bit pair = TCH
bit impair
= TCH ou FACCH
selon flag1 = 0 ou 1

**synchronisation égalisation**
(« bonne » prop.
Auto/inter corrélation)

bit impair = TCH
bit pair = TCH  ou FACCH
selon flag2 = 0 ou 1

**séquence d'apprentissage:**
**26 bits, 8 choix possibles (TSC de 0 à 7)**

**rythme Baud  : 270.833 kbauds**

**durée d'un bit  : 3.692 us**

**burst de 148 bits  : 546.462 us  +  30 us**

**total : 576,875 us = 148+8,25=156,25 symboles**

**bits utiles  : 114 (chiffrés)**

| TSC Bn°61 à Bn°86 | Séquence |
|---|---|
| 0 | 00100101110000100010010111 |
| 1 | 00101101110111100010110111 |
| 2 | 01000011101110100100001110 |
| 3 | 01000111101101000100011110 |
| 4 | 00011010111001000001101011 |
| 5 | 01001110101100000100111010 |
| 6 | 10100111110110001010011111 |
| 7 | 11101111000100101110111100 |

**bits queue :**

| | Séquence |
|---|---|
| Bn°1 à Bn°3 | 000 |
| Bn°146 à Bn°148 | 000 |

## FIG. 6 (cont.)

FIG.7

## Exploitation des caractéristiques temps fréquences aidée par une
## information a priori sur le plan de fréquence (exemple GSM)

| | Caractéristiques de deux cellules traitées | | | | | | | | | | |
|---|---|---|---|---|---|---|---|---|---|---|---|
| | Relevé de planification en mode «passif» | | | | | | | Relevé de planification en mode «actif» (mobile trace) | | | |
| Cellule | CI | BSIC | FuSCCH | FuTCH | | | | HSN(*) | MAIO(**) | TA(**) | TS(**) |
| Cellule 1 | 9664 | 26 | 112 | 108 | 112 | | | 57 | | 2 | 2 |
| Cellule 2 | 24158 | 31 | 103 | 81 | 93 | 99 | 103 | 14 | | 3 | 2 |

## FIG.8

EP 2 661 637 B1

FIG. 8 (cont.)

EP 2 661 637 B1

## Mise en oeuvre aveugle de l'invention sur les émissions GSM TDMA cellule 1

1- application d'une grille temps fréquence indexée sur le plan de fréquence cellule 1 et la trame connues

2- parrallélisation du radiomètre sur chaque slot/trame,

    => seuil, probabilité de détection et probabilité de fausse alarme élémentaires : h, Pd, Pfa

3- post-intégration des résultats sur K' itérations pour optimiser a posteriori la détection et la fausse alarme

Grilles des fréquences cellule 1
canalisation 200 kHz

**Application parallélisée du radiomètre sur chaque domaine temps fréquence sélectionné d'après la grille**

Position de synchrornisation

Grilles temps fréquence indexée sur la trame et le plan de fréquence cellule 1 les paliers d 'une cellule arrivent avec la même synchro.

J
J+1
J+2
J+3
J+4
J+5
J+6
J+7
J+8
J+9
J+10
J+11
J+12
J+13
J+14
J+15
J+16
J+17

temps

fréquence

**Post integ. variante 1 : Conv. de la Pfa$_{K',L}$ et Pd$_{K',L}$ pour au moins L décisions sur K' itérations selon les lois approximatives suivantes :**

Prob.(moins de L f.a.) : $Pfa_{K',L} \approx \sum_{0 \leq l \leq L} C_{K'}^{l} \, Pfa^{l} (1-Pfa)^{K'-l}$

Prob.(au moins L dét.) : $Pd_{K',L} \approx \sum_{L \leq l \leq K'} C_{K'}^{l} \, Pd^{l} (1-Pd)^{K'-l}$

**Post integ. variante 2 : Conv. du RSB sur K' carré accumulations selon la loi approx. suivante :**

$$\rho'_{RSB} \approx \sqrt{K'} \cdot \rho_{RSB}$$

## Exploitation des caractéristiques temps fréquences aidée par une information a priori sur le plan de fréquence (exemple GSM)

| | Caractéristiques de deux cellules traitées | | | | | | | | | |
|---|---|---|---|---|---|---|---|---|---|---|
| | Relevé de planification en mode «passif» | | | | | | Relevé de planification en mode «actif» (mobile trace) | | | |
| Cellule | CI | BSIC | FuSCCH | FuTCH | | | | HSN(*) | MAIO(**) | TA(**) | TS(**) |
| Cellule 1 | 9664 | 26 | 112 | 108 | 112 | | | 57 | | 2 | 2 |
| Cellule 2 | 24158 | 31 | 103 | 81 | 93 | 99 | 103 | 14 | | 3 | 2 |

FIG.9

EP 2 661 637 B1

FIG. 9 (cont.)

EP 2 661 637 B1

## Mise en oeuvre aveugle de l'invention sur les émissions GSM TDMA cellule 1

1- application d'une grille temps fréquence indexée sur le plan de fréquence cellule 1 et la trame connues

2- parrallélisation pour chaque slot/trame de l'inter-corrélation sur une séquence middamble sélectionnée,
=> seuil, probabilité de détection et probabilité de fausse alarme élémentaires : η', Pd', Pfa'

3- post-intégration des résultats pour optimiser a posteriori la détection et la fausse alarme

Grilles des fréquences
canalisation 200 kHz

amplitude

Normalized inter-correlation
gsm_nb5

Critère C | sur séquence GSM n°5 (intercorrélation)

Position de Synchro.

Grilles temps fréquence indexée sur la trame et le plan de fréquence cellule 1

les paliers d'une cellule arrivent avec la même synchro.

J
J+1
J+2
J+3
J+4
J+5
J+6
J+7
J+8
J+9
J+10
J+11
J+12
J+13
J+14
J+15
J+16
J+17

temps

fréquence

**Post integ. variante 1 :** Sélectivité sur la séquence et conv. de la Pfa'$_{K',L}$ et Pd'$_{K',L}$ pour au moins L décisions sur K' réalisations selon les lois approximatives suivantes :

Prob.(moins de L f.a.) : $Pfa'_{K',L} \approx \Sigma_{0 \leq l \leq L} C_{K'}^{l} Pfa'^{l}(1-Pfa')^{K'-l}$

Prob.(au moins L dét.) : $Pd'_{K',L} \approx \Sigma_{L \leq l \leq K'} C_{K'}^{l} Pd'^{l}(1-Pd')^{K'-l}$

**Post integ. variante 2 :** Conv. du RSB du critère C sur K carré accumulations selon la loi approx. suivante :

$$\rho'_{RSB} \approx \sqrt{K'} \cdot \rho_{RSB}$$

# Structure trame UMTS UL trafic d'après 3G TS 25.213 V3.3.0 (2000- 06)

**I : DONNEES**

TFCI et FBI : format trame et feedback diversé Tx (aléas faible)

**DPDCH** : Données $N_{données}$bits

$T_{slotl}$ = 2560 chips, $N_{données}$ = $10*2^k$ bits (k=0.6)

**Q : CONTRÔLE**

**DPCCH** :
| Pilote $N_{données}$bits | TFCI $N_{TFCI}$bits | FBI $N_{FBI}$bits | TPC $N_{TPC}$bits |

$T_{slotl}$ = 2560 chips, 10 bits

**Bits pilote**
Changent à chaque créneau
Égaux à chaque trame

1 Trame = 1 période code échantillonnage

**Bits contrôle puissance aléatoire**

| Créneau #0 | Créneau #1 | | Créneau #i | | Créneau #14 |

1 trame radio: $T_f$ = 10 ms

## Formats créneaux trame UMTS UL trafic d'après 3G TS 25.213 V3.3.0 (2000- 06)

| Forme Créneau temporel à #1 | Canal Bit Débit (kbps) | Symbole Canal Débit (kbps) | SF | Bits/ Trame | Bits/ Créneau | $N_{pilote}$ | $N_{TPC}$ | $N_{TFCI}$ | $N_{FBI}$ | Créneaux transmis par trame radio |
|---|---|---|---|---|---|---|---|---|---|---|
| 0 | 15 | 15 | 256 | 150 | 10 | 6 | 2 | 2 | 0 | 15 |
| 0A | 15 | 15 | 256 | 150 | 10 | 5 | 2 | 3 | 0 | 10-14 |
| 0B | 15 | 15 | 256 | 150 | 10 | 4 | 2 | 4 | 0 | 8-9 |
| 1 | | | | | 10 | 8 | 2 | 0 | 0 | 8-15 |
| 2 | | | | | 10 | 5 | 2 | 2 | 1 | 15 |
| 2A | | | | | 10 | 4 | 2 | 3 | 1 | 10-14 |
| 2B | | | | | 10 | 3 | 2 | 4 | 1 | 8-9 |
| 3 | 15 | 15 | 256 | 150 | 10 | 7 | 2 | 0 | 1 | 8-15 |
| 4 | 15 | 15 | 256 | 150 | 10 | 6 | 2 | 0 | 2 | 8-15 |
| 5 | 15 | 15 | 256 | 150 | 10 | 5 | 1 | 2 | 2 | 15 |
| 5A | 15 | 15 | 256 | 150 | 10 | 4 | 1 | 3 | 2 | 10-14 |
| 5B | 15 | 15 | 256 | 150 | 10 | 3 | 1 | 4 | 2 | 8-9 |

**12 slot formats** — bits Pilote connus pour chaque format slot — position, valeur

**FIG.10**

EP 2 661 637 B1

FIG. 10 (cont.)

EP 2 661 637 B1

## Synchro chip/bit/créneau/trame exploitant la redondance sous-jacente

**signal initial**

**Synchro. chip/créneau/trame**

Parties deterministes
et redondantes

**Aléas**

Déterministe/alternance
aléatoire

partie
Zoomée

⇒Synchro
Chip/bit/créneau/
trame

Une longueur trame
(10 ms)

Une longueur trame
(10 ms)

Créneau temporel
(0,67 ms)

**Filtrage adapté sur réplique d**

Pour chaque $k_0 = 1...\infty$ ; $t_0 = k_0 T_e$ test de $C[k_0 T_e] > h_{FAS-R}$

$$w_{FAS-R}(k_0 T_e) = \left[R_{xx}^{-1} \cdot r_{xd}\right](k_0 T_e)$$

$$y_{FAS-R}(k_0 T_e) = \left(\left[R_{xx}^{-1} \cdot r_{xd}\right](k_0 T_e)\right)^H \cdot x(k_0 T_e)$$

$$C[k_0 T_e] = (r_{xd}(k_0 T_e))^H \left[R_{xx}(k_0 T_e)\right]^{-1} \cdot r_{xd}(k_0 T_e)$$

|C|    Décision $t_0$

$t_0$    t

EP 2 661 637 B1

**Vecteur signal d'entrée**

**Critère en sortie**

$$\underline{x}(t)=\begin{pmatrix} x_1(t) \\ x_2(t) \\ \cdots \\ x_N(t) \end{pmatrix}$$

$w_{p,1}$

$w_{p,2}$

$\cdots$

$w_{p,N}$

$+$

$y(k_0 T_e)$: **Sortie scalaire**

$C[k_0 T_e]$

$\int_{TK} y(t + \tau) \cdot d(t)\, dt$

FAS-R : $\underline{w}_{FAS-R} \cong R_{xx}^{-1} \cdot R_{xc}$
$C \cong \underline{y}^H \cdot_K \underline{x}$

**Structure du filtre spatial**

FIG.11a

**Formation de voie et radiométrie testées sur $\Theta'_1 \ldots \Theta'_{p'}$**

Pour chaque $k_0 = 1\ldots\infty$ ; $t_0 = k_0 T_e$ ; Pour chaque $p = 1\ldots P'$, $A[\Theta'p, k_0 T_e] > \eta_{radio}$

Max de $\{A[\Theta'_p, k_0 T_e]\}$ sur $p$ et $k_0$

voie 3 — $\Theta'_3$

voie 2 — $\Theta'_2$

voie 1 — $\Theta'_1$

etc.

$\Theta'_0$

$\Theta_0$

$\Theta_{3dB}$

$\mathbf{k}(\Theta_0)$ Direction Source Signal s

$\Theta_1$ $\hat{\underline{a}}(\Theta_1)$

$A[\Theta'_P, k_0 T_e]$ décision $\Theta'_1$ Pour l'estimation de $\Theta_0$

$\Theta_0$ $\Theta'_1$ $\Theta'_2$ $\Theta'_3$ $\theta$

**Vecteur signal d'entrée**

$\underline{x}(t) =$ $\begin{pmatrix} x_1(t) \\ x_2(t) \\ \cdots \\ x_N(t) \end{pmatrix}$

$w_{p,1}$

$w_{p,2}$

$\cdots$

$w_{p,N}$

$+$

$s'_p(\Theta'_p, k_0 T_e)$: **Sortie scalaire voie p**

**Critère d'énergie sur $\Theta'_1 \ldots \Theta'_{p'}$**

$E[|\ |^2]$ — $A[\Theta'_p, k_0 T_e]$

FVclassique: $\underline{w}_{SMF} \cong \underline{a}'_p(\Theta'_p)$

FVAdaptative: $\underline{w}_{SMF} \cong \beta . R_{xx}^{-1} \underline{a}'_p(\Theta'_p)$

FVCapon: $\beta_{Capon} \cong 1/(\underline{a}'p(\Theta'p)^H R_{xx}^{-1} \underline{a}'_p(\Theta'_p))$

**Structure du filtre spatial**

FIG.11b

Signal s(t)
Enveloppe S

Bruit n(t)

$E_{s+n,T}$

$(1/N_0).\int_0^T (s^2+n^2)(t).dt$

$\frac{1}{N_0}\int_0^T (s^2+n^2)(t)\, dt$

Principe du radiomètre classique
Pfa = proba $(E_{n,T} > h)$
Pd = proba $(E_{s+n,T} > h)$
$r_{RSB} \approx (E[S+n])^2/E([n-E[n])^2]$

Détection d'énergie mise en oeuvre
sur un calcul de spectre

Seuil η

Estimation bruit

$\rho_{RSB}$

Détection d'énergie/front mise en oeuvre
sur un calcul d'amplitude fonction du temps

Front
montée

Front
descente

Seuil η

Estimation bruit

$\rho_{RSB}$

FIG.11c

**Intercorrélation d'un squitter ADSB de 120 μs avec différentes références**

FIG.12

Voie I

Amplitude
Signal réel
FI 0 MHz filtré PB

Position
début
préambule
8 durées bits

Intercorrélation normalisée
avec référence préambule (8 ms)

Position
début
Référence
32 durées bits

Intercorrélation normalisée
avec référence 32 premiers bits msg (32 ms)

## ADS-B : analyse des paramètres stationnaires sur un enregistrement d'une série de 42 squitters consécutifs filtrés passe-bas

t=Ct=273,50 µs

0,0096

$S_1$ $S_2$ $S_3$

$S_{42}$

t=20,00 t=28,00 µs      t=60,00 µs      t=82,00 µs   t=99,00 µs   t=116,00 µs      t=140,00 µs

Voie I

0,0096

Squitter $S_1$ complet de 120 ms

Squitter $S_2$
début

Espacement
entre squitter
réduit à 80 µs

FIG.13

EP 2 661 637 B1

## FIG. 13 (cont.)

# ADS-B : recherche, synchronisation et association de squitters de même contenu

FIG.14

## ADS-B : sommation cohérente de signaux aux contenus identiques après association

Signal message squitter 3

Signal message squitter 24

Sommation cohérente messages squitter 3 et squitter 24

Démodulation et décodage

FIG.15

EP 2 661 637 B1

**EP 2 661 637 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2008042865 A2
- US 2004022301 A
- FR 2909772
- EP 2010055118 A

### Littérature non-brevet citée dans la description

- **HOU YING-NI et al.** Airship radar imaging for stationary and moving targets based on thinned array and code division signal. *Synthetic Aperture Radar,* 2009, 622-625
- **YONG XIANG et al.** Blind separation of cyclostationary sources based on phase-frequency redundancy. *proceedings,* 2004, vol. 1, 403-406
- Triple correlation analysis of binary sequences for codeword détection. *IEE Proc.-Vis. Image Signal Process.,* Octobre 1994, vol. 141 (5